(19) Europäisches Patentamt
European Patent Office
Office européen des brevets

(11) **EP 2 359 974 B1**

(12) **EUROPÄISCHE PATENTSCHRIFT**

(45) Veröffentlichungstag und Bekanntmachung des Hinweises auf die Patenterteilung:
**03.07.2019 Patentblatt 2019/27**

(51) Int Cl.:
***B23K 9/09*** *(2006.01)*     ***B23K 9/073*** *(2006.01)*
***B23K 9/173*** *(2006.01)*

(21) Anmeldenummer: **10191833.2**

(22) Anmeldetag: **19.11.2010**

(54) **Lichtbogen-Schweißverfahren und Schweißstromquelle zur Durchführung des Verfahrens**

Arc welding method and welding power source for performing the method

Procédé de soudage à l'arc et source d'électricité de soudage pour la réalisation du procédé

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **18.02.2010 DE 102010002121**

(43) Veröffentlichungstag der Anmeldung:
**24.08.2011 Patentblatt 2011/34**

(73) Patentinhaber: **Lorch Schweisstechnik GmbH 71549 Auenwald (DE)**

(72) Erfinder:
• **Jaeschke, Birger**
**71522, Backnang (DE)**
• **Knuf, Frank**
**73667 Kaisersbach (DE)**

(74) Vertreter: **Hoeger, Stellrecht & Partner Patentanwälte mbB Uhlandstrasse 14c 70182 Stuttgart (DE)**

(56) Entgegenhaltungen:
**DE-A1- 4 233 818    US-A1- 2007 235 434**

EP 2 359 974 B1

**Beschreibung**

Die Erfindung betrifft ein Lichtbogen-Schweißverfahren, bei dem zwischen einer einem Schweißbrenner kontinuierlich zugeführten abschmelzenden Schweißelektrode und einem Werkstück ein elektrischer Lichtbogen in einer Schutzgasatmosphäre brennt und von der Schweißelektrode abgeschmolzener Werkstoff in ein Schmelzbad auf dem Werkstück übergeht, wobei der Schweißelektrode von einer Schweißstromquelle ein gepulster Schweißstrom zugeführt wird, der eine Grundstromphase, eine Pulsstromphase sowie eine an die Pulsstromphase anschließende Zwischenstromphase aufweist.

Außerdem betrifft die Erfindung eine Schweißstromquelle zur Durchführung des voranstehend genannten Lichtbogen-Schweißverfahrens, wobei die Schweißstromquelle ein Steuerteil und ein vom Steuerteil steuerbares Leistungsteil aufweist, an dessen Ausgang eine Schweißelektrode anschließbar ist, wobei vom Leistungsteil ein gepulster Schweißstrom bereitstellbar ist, der eine Grundstromphase, eine Pulsstromphase und eine an die Pulsstromphase anschließende Zwischenstromphase aufweist.

Lichtbogen-Schweißverfahren, bei denen zwischen einer Schweißelektrode und einem Werkstück ein Lichtbogen brennt, sind in verschiedenen Ausgestaltungen bekannt. Beim Metall-Schutzgasschweißen wird einem Schweißbrenner kontinuierlich eine Schweißelektrode zugeführt, von der aus der Lichtbogen in einer Schutzgasatmosphäre zu einem Schmelzbad des Werkstückes brennt. Als Schweißelektrode kommt üblicherweise eine Drahtelektrode zum Einsatz. Aufgrund des Lichtbogens wird das lichtbogenseitige Ende der Schweißelektrode so stark erhitzt, dass es sich verflüssigt und sich einzelne Tropfen ablösen, die in das Schmelzbad übergehen. Die Ausbildung einzelner Tropfen wird beim so genannten Pulsschweißen gezielt hervorgerufen, indem der Schweißstrom ausgehend von einer Grundstromphase mit verhältnismäßig geringer Grundstromamplitude innerhalb kurzer Zeit stark erhöht wird auf eine Pulsstromamplitude, die während einer Pulsstromphase beibehalten wird. Anschließend wird der Schweißstrom wieder auf die Grundstromamplitude abgesenkt. Die starke Erhöhung auf die Pulsstromamplitude hat zur Folge, dass sich von dem verflüssigten Ende der Schweißelektrode aufgrund des so genannten Pinch-Effektes Tropfen ablösen, die in Richtung des Schmelzbades beschleunigt werden. Zur Erzielung einer hochwertigen Schweißnaht ist es von Vorteil, wenn sich in jeder Pulsstromphase des Schweißstroms jeweils nur ein einziger Tropfen ablöst und sich in das Schmelzbad bewegt. Durch die Bereitstellung eines gepulsten Schweißstroms, bei dem sich die Amplitude ausgehend von einer Grundstromamplitude innerhalb kurzer Zeit stark erhöht, um dann für eine gewisse Zeit eine Pulsstromamplitude einzunehmen und anschließend wieder auf die Grundstromamplitude abzufallen, kann somit ein einzelner Tropfen erzeugt werden, ohne dass unkontrolliert weitere Tropfen gebildet werden, die üblicherweise zu ungerichteten Spritzern führen würden.

Bei einer Erhöhung des Schweißstroms werden ab einer kritischen Stromstärke eine starke Erhöhung der Tropfenfrequenz und gleichzeitig eine deutliche Abnahme der Tropfengröße beobachtet. Es bildet sich ein so genannter Sprühlichtbogen aus, bei dem sich kontinuierlich Werkstoff von der Schweißelektrode in Form sehr kleiner Tropfen ablöst. Der Sprühlichtbogen hat den Vorteil, dass innerhalb kurzer Zeit eine große Menge an Werkstoff von der Schweißelektrode abgelöst werden kann, es wird also eine hohe Abschmelzleistung erzielt. Allerdings lässt sich nicht in allen Fällen die Ausbildung ungerichteter Spritzer vermeiden. Außerdem hat der Sprühlichtbogen eine verhältnismäßig große flächenmäßige Ausdehnung und ist vom Schweißer häufig nur schwer zu kontrollieren. Darüber hinaus ist ein Schweißen unter Zwangslagen mittels eines Sprühlichtbogens in aller Regel nicht möglich.

Aus der DE 198 08 383 A1 ist ein Lichtbogen-Schweißverfahren bekannt, bei dem man den Schweißstrom in einer an die Pulsstromphase anschließenden Zwischenstromphase gezielt auf einen bestimmten Stromwert absenkt, der kleiner ist als die Pulsstromamplitude, aber höher als die Grundstromamplitude. Dies ermöglicht ein spritzerarmes Schweißen von Metallteilen, insbesondere Magnesiumteilen.

Der Schweißstrom wird üblicherweise in den einzelnen Stromphasen auf unterschiedliche Stromsollwerte konstant geregelt, so dass er sowohl in der Grundstromphase als auch in der Pulstromphase und darüber hinaus auch in der Zwischenstromphase einen konstanten Wert einnimmt. Der Stromsollwert für die Pulsstromphase kann hierbei an die für die Tropfenablösung erforderlichen Anforderungen im Hinblick auf die Stromhöhe und die Pulsstromdauer angepasst werden, so dass eine hohe Prozesssicherheit bezüglich des gezielten Ablösens eines einzelnen Tropfens pro Pulsphase erzielt werden kann.

Es sind auch Lichtbogen-Schweißverfahren bekannt, bei denen statt eines bestimmten Stromsollwertes ein bestimmter Spannungssollwert für die Ausgangsspannung der Schweißstromquelle vorgegeben wird. Der Momentanwert des Schweißstromes variiert dann in Abhängigkeit vom Lichtbogenwiderstand. Der Lichtbogenwiderstand ist von der Länge des Lichtbogens abhängig. Bei kürzerem Lichtbogen ist der Lichtbogenwiderstand verhältnismäßig gering und bei Vorgabe einer definierten Ausgangsspannung stellt sich eine relativ hohe Stromamplitude ein. Bei längerem Lichtbogen ist der Lichtbogenwiderstand größer und es stellt sich eine geringere Stromamplitude ein. Eine Regelung mit vorgegebenem Spannungssollwert ermöglicht es bei kontinuierlicher Zuführung der Schweißelektrode zum Schweißbrenner, die Lichtbogenlänge zu stabilisieren, da der Schweißstrom in Abhängigkeit von der Lichtbogenlänge variiert und sich damit auch die Abschmelzleistung in Abhängigkeit von der Lichtbogenlänge verändert. Da die mehr oder weniger stark abschmelzende Schweißelektrode dem Schweißbrenner kontinuierlich zugeführt wird, hat eine Verringerung der Abschmelzleistung eine Verringerung der Lichtbogenlänge zur Folge, wohingegen eine erhöhte Abschmelzleistung zu einer Verkürzung der Lichtbogenlänge führt. Die Vorgabe eines Spannungssollwertes führt somit zu einer Stabilisierung der Lichtbogenlänge. Die sich in Abhängigkeit vom Lichtbogenwiderstand verändernde Stromamplitude hat jedoch zur Folge, dass die Prozesssicherheit bezüglich des gezielten Ablösens eines einzigen Tropfens pro Pulsstromphase verloren geht. Dies hat seinen Grund darin, dass die so genannte Pinch-Kraft von der Stromhöhe abhängig ist. Eine aufgrund eines höheren Lichtbogenwiderstandes verminderte Stromhöhe kann dazu führen, dass sich während der Pulsstromphase überhaupt kein Tropfen ablöst. In der daraufhin folgenden nächsten Pulsstromphase ist dann verhältnismäßig viel geschmolzenes Elektrodenmaterial vorhanden, so dass sich nunmehr ein verhältnismäßig großer Tropfen ablöst, der dann nicht mehr spritzer- und kurzschlussfrei in das Schmelzbad übergeht.

In der EP 0 787 555 A1 wird ein Lichtbogen-Schweißverfahren beschrieben, bei dem ein erstes Segment der Pulsstromphase zum Auslösen einer Tropfenablösung durch einen relativ hohen konstanten Strom verwendet wird. An das erste Segment schließt sich ein zweites Segment der Pulsstromphase an mit einem konstanten, relativ kleinen Stromwert, unter dessen Wirkung der abgelöste Tropfen sanft in das Schmelzbad übergehen soll. Nach Übergang des Tropfens in das Schmelzbad wird von einer Stromregelung auf eine Spannungsregelung umgeschaltet, das heißt die Ausgangsspannung der Schweißstromquelle wird auf einen vorgegebenen Spannungssollwert geregelt, um dadurch den Lichtbogen zu stabilisieren. Anschließend wird wieder auf eine Stromregelung umgeschaltet zur Regelung des Schweißstromes in der Grundstromphase auf Basis eines vorgegebenen Stromsollwertes.

Die Abfolge von Strom- und Spannungsregelungen wird auch in der EP 1 407 849 A2 beschrieben. Die einzelnen Regelverfahren werden zyklisch durchlaufen, wobei entweder die Ausgangsspannung der Schweißstromquelle auf einen vorgegebenen Spannungssollwert geregelt wird oder der Schweißstrom auf einen vorgegebenen Stromsollwert geregelt wird.

In der WO 2005/044502 A1 wird vorgeschlagen, zyklisch zwischen einem Pulsschweißen und einem Sprühlichtbogenschweißen umzuschalten, wobei die Zykluszeit bzw. die Zyklusfrequenz vom Nutzer vorgegeben werden kann. Vorgeschlagen werden Zykluszeiten von 25 ms bis 1000 ms. Die gewählten zeitlichen Größenordnungen bewirken, dass sich jede Schweißvariante stabilisieren kann, das heißt im Pulsschweiß-Zyklus erfolgen mehrere Pulse mit entsprechender Tropfenablösung nacheinander, so dass sich die für das Pulsschweißen charakteristische Wärmeeinbringung und Schmelzbadbeeinflussung ausbilden kann. Die verhältnismäßig langen Zykluszeiten ermöglichen auch eine Stabilisierung des Schweißprozesses bei Änderungen der Vorschubgeschwindigkeit der dem Schweißbrenner kontinuierlich zugeführten Schweißelektrode.

In der DE 32 00 086 A1 wird ein Lichtbogen-Schweißverfahren beschrieben, bei dem man mittels eines Statik-Schaltkreises Istwerte des Schweißstromes und der Ausgangsspannung der Schweißstromquelle mit einer statischen Spannungs-Strom-Kennlinie vergleicht und bei Abweichungen einen Dynamik-Schaltkreis so ansteuert, dass ein gewünschter Arbeitspunkt auf der Spannungs-Strom-Kennlinie erreicht werden kann. Ein derartiges Regelverfahren ermöglicht eine Stabilisierung der Lichtbogenlänge, denn bei verhältnismäßig kurzem Lichtbogen, das heißt bei verhältnismäßig geringem Lichtbogenwiderstand, stellt sich dynamisch ein höherer Stromwert ein, welcher mehr Material von der Schweißelektrode abschmilzt, und bei verhältnismäßig großem Lichtbogen und damit verbunden bei einem verhältnismäßig großem Lichtbogenwiderstand stellt sich dynamisch ein geringerer Stromwert ein, welcher weniger Material von der Schweißelektrode abschmilzt. Aufgrund der kontinuierlichen Zuführung der Schweißelektrode zum Schweißbrenner kann damit eine verhältnismäßig gleich bleibende Lichtbogenlänge erzielt werden. Nachteilig an diesem Regelverfahren ist aber wiederum, dass sich die Beeinflussung des Schweißstromes in der Pulsstromphase direkt auf die Tropfenablösung auswirkt. Wie bereits erwähnt, ist die den Tropfen ablösende Pinch-Kraft von der Stromhöhe abhängig, und eine verminderte Stromhöhe kann dazu führen, dass sich während einer ersten Pulsstromphase überhaupt kein Tropfen ablöst und sich während der nächsten Pulsstromphase ein sehr großer Tropfen ablöst, der dann nicht mehr ohne Spritzer und Ausbildung eines Kurzschlusses in das Schmelzbad übergeht.

Aus der US 2007/235434 A1 sind ein Schweißverfahren und ein Schweißgerät bekannt, wobei ein pulsierender Schweißstrom bereitgestellt wird. Ausgehend von einer Grundstromphase geht der Schweißstrom über eine ansteigende Übergangsphase in eine Pulsstromphase über, an die sich über eine abfallende Übergangsphase wieder eine Grundstromphase anschließt. Die Grundstromphase, die Pulsstromphase sowie die ansteigenden und abfallenden Übergangsphasen können spannungsgeregelt oder stromgeregelt sein, in jeder beliebigen Kombination. Bei einer Stromregelung wird der Ausgangsstrom des Schweißgerätes überwacht und auf einen gewünschten Stromsollwert justiert. Bei einer Spannungsregelung wird die Ausgangsspannung des Schweißgerätes überwacht und auf einen gewünschten Spannungssollwert justiert.

Aufgabe der vorliegenden Erfindung ist es, ein Lichtbogen-Schweißverfahren der eingangs genannten Art sowie eine Schweißstromquelle zur Durchführung des Lichtbogen-Schweißverfahrens bereitzustellen, wobei eine hohe Abschmelzleistung und eine Stabilisierung der Lichtbogenlänge erzielt werden können und der Lichtbogen vom Schweißer einfach zu handhaben ist.

Diese Aufgabe wird bei einem gattungsgemäßen Lichtbogen-Schweißverfahren erfindungsgemäß dadurch gelöst, dass man den Schweißstrom in der Zwischenstromphase auf Basis eines Stromsollwertes regelt, den man in Abhängigkeit vom Stromistwert des Schweißstroms und vom Spannungsistwert der Ausgangsspannung der Schweißstromquelle bestimmt.

Während der Grundstromphase und während der Pulsstromphase kann der Schweißstrom auf Basis konstanter Stromsollwerte geregelt werden und während der Zwischenstromphase wird der Schweißstrom auf Basis eines Stromsollwertes geregelt, in dessen Bestimmung der aktuelle Istwert des Schweißstromes und auch der aktuelle Istwert der Ausgangsspannung der Schweißstromquelle mit einfließen. Somit kann für die Pulsstromphase eine Pulsstromamplitude sichergestellt werden, die das Ablösen eines einzigen Tropfens während der Pulsstromphase gewährleistet. Die Tropfenablösung ist somit auf einfache Weise reproduzierbar. Der abgelöste Tropfen kann praktisch spritzer- und kurzschlussfrei in das Schmelzbad übergehen.

Auch in der Grundstromphase kann der Schweißstrom auf einen konstanten Wert geregelt werden. Die Grundstromamplitude kann derart vorgegeben werden, dass sichergestellt ist, dass der Lichtbogen während der Grundstromphase nicht erlischt.

An die Pulsstromphase schließt sich erfindungsgemäß eine Zwischenstromphase an, in der die Regelung des Schweißstromes auf Basis eines Stromsollwertes erfolgt, der sowohl vom Stromistwert des Schweißstromes als auch vom Spannungsistwert der Ausgangsspannung der Schweißstromquelle abhängig ist. Es kann sich daher in der an die Pulsstromphase anschließenden Zwischenstromphase ein vom Lichtbogenwiderstand abhängiger Schweißstrom ausbilden. Bei eher geringem Lichtbogenwiderstand können sich unter der Wirkung des Schweißstroms nach Ablösung des Tropfens aus der Pulsstromphase weitere kleinvolumige Tropfen oder auch ein zunächst noch zusammenhängender Flüssigkeitszylinder geringen Durchmessers ausbilden, die sich während der Dauer der Zwischenstromphase von der Schweißelektrode ablösen und dem bereits abgelösten ersten Tropfen folgen. Das erfindungsgemäße Verfahren zeichnet sich demzufolge durch eine hohe Abschmelzleistung aus. Durch die Bereitstellung der Zwischenstromphase können nach dem ersten großen Tropfen noch weitere kleine Tropfen oder auch ein schmaler Flüssigkeitszylinder abgeschnürt werden, die in Richtung auf das Schmelzbad gelenkt werden. Damit wird der Elektrodenspitze ein größerer Teil des flüssigen Werkstoffes entzogen, als dies beim üblichen Pulsschweißen der Fall ist. Das freie Ende der Schweißelektrode weist deshalb nicht mehr die sonst übliche abgerundete Form auf sondern ist spitz ausgebildet, so dass der Ansatzpunkt des Lichtbogens sehr konzentriert an der Elektrodenspitze ansetzt. Während der der Zwischenstromphase nachfolgenden Grundstromphase wird nur unwesentlich Material an der Elektrodenspitze aufgeschmolzen. Von den während der Zwischenstromphase abgelösten kleineren Tropfen erreichen nicht unbedingt alle während der Grundstromphase das Werkstück. Dies hat zur Folge, dass sich in der der Grundstromphase nachfolgenden nächsten Pulsstromphase innerhalb des Lichtbogenbereichs noch kleinere Tropfen befinden, die Metall verdampfen, so dass im Lichtbogenbereich eine verhältnismäßig hohe Konzentration an Metalldampf vorliegt. Dadurch kann sich während der Pulsstromphase ein sehr stabiler Lichtbogen ausbilden. Außerdem bewirken der hohe Dampfdruck und das konzentrierte Plasma auf dem Werkstück einen tiefen, fingerartigen Einbrand. Der Lichtbogen ist sehr stabil, das heißt er ist unempfindlich gegenüber Störeinflüssen. Der fingerartige Einbrand hat den Vorteil, dass Werkstücke sehr stabil miteinander verbunden werden können, da die Fuge zwischen den beiden Werkstücken bis zur Tiefe des Einbrands verschmolzen wird und somit die Verbindung der Werkstücke eine hohe Festigkeit aufweist.

Die Bereitstellung eines Stromsollwertes der Zwischenstromphase in Abhängigkeit vom Stromistwert des Schweißstroms und in Abhängigkeit vom Spannungsistwert der Ausgangsspannung der Schweißstromquelle ermöglicht eine Lichtbogenlängenregelung in der Zwischenstromphase, so dass bei einem verhältnismäßig langen Lichtbogen und somit bei einem verhältnismäßig hohen Lichtbogenwiderstand der Stromsollwert reduziert und bei einem verhältnismäßig kurzen Lichtbogen und damit verbunden bei einem verhältnismäßig geringen Lichtbogenwiderstand der Stromsollwert in der Zwischenstromphase erhöht wird. Somit kann sich in der Zwischenstromphase in Abhängigkeit vom aktuellen Lichtbogenwiderstand mehr oder weniger Werkstoff von der Schweißelektrode ablösen, um dadurch die Abschmelzleistung zu erhöhen und die Lichtbogenlänge zu stabilisieren. Der Stromwert kann sich in der Zwischenstromphase innerhalb sehr kurzer Zeit ändern, um auf eine geänderte Lichtbogenlänge zu reagieren. Da jedoch die Bestimmung des Stromsollwertes in der Zwischenstromphase abhängig ist vom aktuellen Stromistwert des Schweißstroms und dem aktuellen Spannungsistwert der Ausgangsspannung der Schweißstromquelle, bleibt während der auf einen konstanten Stromsollwert geregelten Pulsstromphase sichergestellt, dass sich jeweils ein einzelner Tropfen von der Schweißelektrode ablöst.

Somit ermöglicht es das erfindungsgemäße Lichtbogen-Schweißverfahren, einerseits eine hohe Abschmelzleistung zu erzielen und andererseits die Lichtbogenlänge zu stabilisieren, wobei der Lichtbogen vom Schweißer auf einfache Weise zu handhaben ist. Die Gefahr von Spritzern wird ebenso reduziert wie die Gefahr der Ausbildung von Kurzschlüssen. Die Regelung des Schweißstroms in der Pulsstromphase auf einen konstanten Stromsollwert ermöglicht die gezielte Ablösung eines einzigen Tropfens in der Pulsstromphase, die Regelung des Stromsollwertes in der Zwischenstromphase in Abhängigkeit vom Stromistwert und vom Spannungsistwert ermöglicht eine Stabilisierung der Lichtbogenlänge und die Regelung des Schweißstroms in der Grundstromphase auf einen konstanten Stromsollwert stellt sicher, dass einerseits der Lichtbogen in der Grundstromphase nicht erlischt und dass andererseits sich die Spitze der Schweißelektrode in der Grundstromphase nicht übermäßig erwärmt und somit bereits in der Grundstromphase eine große Menge an Werkstoff verflüssigt wird.

Von Vorteil ist es, wenn man den Stromsollwert der Zwischenstromphase unter Berücksichtigung von Korrekturfaktoren bestimmt. Die Korrekturfaktoren können den Einfluss des Stromistwertes des Schweißstroms und den Einfluss des Spannungsistwertes der Ausgangsspannung der Schweißstromquelle auf den Stromsollwert in der Zwischenstromphase gewichten. Beispielsweise kann vorgesehen sein, dass ein Korrekturfaktor, der dem Stromistwert zugeordnet ist, beträchtlich größer gewählt wird als ein Korrekturfaktor, der dem Spannungsistwert zugeordnet ist. Dies hat zur Folge, dass Spannungsänderungen während der Zwischenstromphase einen geringeren Einfluss auf die Bildung des Stromsollwertes haben als Stromänderungen. Umgekehrt kann vorgesehen sein, dass der dem Spannungsistwert zugeordnete Korrekturfaktor deutlich größer ist als der dem Stromistwert zugeordnete Korrekturfaktor. Eine derartige Wahl der Korrekturfaktoren hat zur Folge, dass der Stromsollwert in der Zwischenstromphase sehr stark auf Änderungen der Ausgangsspannung reagiert, wohingegen Änderungen des Stromistwertes für die Bildung des Stromsollwertes in der Zwischenstromphase von geringerer Bedeutung sind.

Die Korrekturfaktoren können im einfachsten Fall vom Schweißer vorgegeben werden. Ergänzend oder alternativ können die Korrekturfaktoren vom Schweißprozess abhängig sein, das heißt sie können prozessabhängige Variable sein. In die Bestimmung der Korrekturfaktoren können beispielsweise die Höhe der Pulsstromamplitude, die Höhe der Grundstromamplitude und/oder das zeitliche Verhalten des Schweißstroms in der Zwischenstromphase oder auch das zeitliche Verhalten der Ausgangsspannung der Schweißstromquelle oder auch sonstige messbare oder manuell vorgebbare Parameter einfließen.

Bei einer besonders vorteilhaften Ausführungsform des erfindungsgemäßen Schweißverfahrens bildet man für die Bestimmung des Stromsollwertes der Zwischenstromphase die Summe aus dem Stromistwert des Schweißstroms und dem Spannungsistwert der Ausgangsspannung der Schweißstromquelle, wobei man den Stromistwert und den Spannungsistwert jeweils mit einem vorgebbaren Korrekturfaktor gewichtet. Der Stromsollwert der Zwischenstromphase ist somit proportional zur Summe des mit einem ersten Korrekturfaktor gewichteten Stromistwertes und des mit einem zweiten Korrekturfaktor gewichteten Spannungsistwertes. Die Gewichtung erfolgt dadurch, dass man die Istwerte mit dem jeweiligen Korrekturfaktor multipliziert.

Günstig ist es, wenn man zur Summe des gewichteten Stromistwertes und des gewichteten Spannungsistwertes noch einen weiteren Korrekturfaktor addiert. Der weitere Korrekturfaktor bildet eine sowohl vom Spannungsistwert als auch vom Stromistwert unabhängige Größe, die in die Bestimmung des Stromsollwertes in der Zwischenstromphase einfließt. Der Stromsollwert der Zwischenstromphase kann bei einer derartigen Ausgestaltung des erfindungsgemäßen Verfahrens durch folgende Beziehung dargestellt werden:

$$I_{soll} = K1 + K2 * I_{ist} + K3 * U_{ist}$$

Mit $I_{soll}$ wird der Stromsollwert der Zwischenstromphase bezeichnet, $I_{ist}$ bezeichnet den Stromistwert des Schweißstromes, $U_{ist}$ bezeichnet den Spannungsistwert der Ausgangsspannung der Schweißstromquelle, K1 bezeichnet einen Korrekturfaktor, der unabhängig ist vom aktuellen Stromistwert und vom aktuellen Spannungsistwert, und mit K2 und K3 werden Korrekturfaktoren bezeichnet, die den Einfluss des Stromistwertes bzw. den Einfluss des Spannungsistwertes auf die Bestimmung des Stromsollwertes gewichten.

Bei einer vorteilhaften Ausführungsform des erfindungsgemäßen Verfahrens bildet man den Stromsollwert der Zwischenstromphase aus der Summe des Stromistwertes und der jeweils mit einem Korrekturfaktor gewichteten Abweichungen des Spannungsistwertes der Ausgangsspannung der Schweißstromquelle von einem Spannungsfestwert und des Stromistwertes des Schweißstroms von einem Stromfestwert. Der Spannungsfestwert und der Stromfestwert können beispielsweise vom Benutzer der Schweißstromquelle vorgegeben werden. Es kann auch vorgesehen sein, dass der Spannungsfestwert und/oder der Stromfestwert prozessabhängige Variable sind. In die Bestimmung des Spannungsfestwertes und des Stromfestwertes können beispielsweise das zeitliche Verhalten des Schweißstromes in der Zwischenstromphase und/oder die Höhe der Grundstromamplitude und/oder die Höhe der Pulsstromamplitude einfließen. Darauf wird nachfolgend noch näher eingegangen. Der Stromsollwert der Zwischenstromphase kann bei einer derartigen Ausgestaltung des erfindungsgemäßen Verfahrens durch folgende Beziehung dargestellt werden:

$$I_{soll} = I_{ist} + K4 * (U_{fest} - U_{ist}) + K5 * (I_{fest} - I_{ist})$$

Mit $I_{soll}$ wird hierbei der Stromsollwert der Zwischenstromphase bezeichnet, $I_{ist}$ bezeichnet den Istwert des Schweißstroms, $U_{ist}$ bezeichnet den Istwert der Ausgangsspannung der Schweißstromquelle, $U_{fest}$ bezeichnet den Spannungsfestwert, $I_{fest}$ bezeichnet den Stromfestwert und mit K4 und K5 werden Korrekturfaktoren bezeichnet, die die Abweichung des Spannungsistwertes vom Spannungsfestwert bzw. die Abweichung des Stromistwertes vom Stromfestwert gewichten.

Zur Regelung des Schweißstromes kann ein analoger oder digitaler Stromregler zum Einsatz kommen.

Günstig ist es, wenn man den Schweißstrom in der Zwischenstromphase zyklisch regelt, wobei man zur Bestimmung des Stromsollwertes in einem aktuellen Regelzyklus die im vorangehenden Regelzyklus gemessenen Istwerte des Schweißstromes und der Ausgangsspannung der Schweißstromquelle heranzieht, wobei man diese Istwerte jeweils mit einem Korrekturfaktor gewichtet. Statt des im vorangegangenen Regelzyklus gemessenen Istwertes des Schweißstromes kann auch der im vorangegangenen Regelzyklus bestimmte Sollwert des Schweißstromes zur Bestimmung des Stromsollwertes im aktuellen Regelzyklus herangezogen werden.

Der Stromsollwert in der Zwischenstromphase kann bei zyklischer Regelung besonders vorteilhaft durch folgende Beziehung dargestellt werden:

$$ I_{soll}(t+dt) = I_{ist}(t) + K4 * (U_{fest} - U_{ist}(t)) + K5 * (I_{fest} - I_{ist}(t)) $$

Mit $I_{soll}(t+dt)$ wird hierbei der Stromsollwert in der Zwischenstromphase im Regelzyklus zum Zeitpunkt $t+dt$ bezeichnet, mit $I_{ist}(t)$ wird der Stromistwert während des vorangegangenen Regelzyklus zum Zeitpunkt $t$ bezeichnet, K4 bezeichnet einen Korrekturfaktor, der beispielsweise vorgegeben werden kann, $U_{fest}$ bezeichnet einen Spannungsfestwert, $U_{ist}(t)$ bezeichnet den Spannungsistwert, der während des vorangegangenen Regelzyklus zum Zeitpunkt $t$ bestimmt wurde, K5 bezeichnet einen weiteren Korrekturfaktor, $I_{fest}$ bezeichnet einen Stromfestwert und $I_{ist}(t)$ bezeichnet den im vorangegangenen Regelzyklus zum Zeitpunkt $t$ erfassten Stromistwert des Schweißstromes. Statt des Wertes $I_{ist}(t)$ könnte auch der im vorangegangenen Regelzyklus zum Zeitpunkt $t$ bestimmte Stromsollwert $I_{soll}(t)$ herangezogen werden.

Bei einer besonders einfach handhabbaren Ausgestaltung des erfindungsgemäßen Schweißverfahrens ordnet man einer Vielzahl von Korrekturfaktoren jeweils einen Führungsparameter zu und man hinterlegt die Korrekturfaktoren mit der Zuordnung von Führungsparametern in einem Speicherglied, und bei Vorgabe eines bestimmten Führungsparameters ruft man die diesem Führungsparameter zugeordneten Korrekturfaktoren aus dem Speicherglied ab und zieht diese zur Bestimmung des Stromsollwertes in der Zwischenstromphase heran. Eine derartige Ausgestaltung ermöglicht es dem Schweißer, statt einer Vielzahl von Korrekturfaktoren lediglich einen bestimmten Führungsparameter vorzugeben. Die Vorgabe dieses Führungsparameters hat dann zur Folge, dass die diesem Führungsparameter zugeordneten Korrekturfaktoren aus dem Speicherglied abgerufen und zur Bildung des Stromsollwertes in der Zwischenstromphase herangezogen werden.

Als Führungsparameter kann beispielsweise ein über die Pulsdauer gemittelter Schweißstrom zum Einsatz kommen, der vom Schweißer vorgegeben werden kann. Die Korrekturfaktoren werden dann in Abhängigkeit vom vorgegebenen mittleren Schweißstrom aus dem Speicherglied abgerufen.

Als Führungsparameter kann aber auch die Vorschubgeschwindigkeit der Schweißelektrode verwendet werden oder auch eine mittlere Ausgangsspannung der Schweißstromquelle oder auch ein abstrakter Eingabewert, der beispielsweise ein Maß ist für die Ausgangsleistung der Schweißstromquelle. Diese Werte können vom Schweißer vorgegeben werden und die Vorgabe hat dann zur Folge, dass die jeweils den Werten zugeordneten Korrekturfaktoren aus dem Speicherglied abgerufen und zur Bestimmung des Stromsollwertes in der Zwischenstromphase herangezogen werden.

Als Führungsparameter kann auch der lediglich über die Dauer der Zwischenstromphase gemittelte Schweißstrom verwendet werden. Dieser Mittelwert ist von der gemittelten Lichtbogenlänge abhängig und kann günstigerweise vom Schweißer vorgegeben werden.

Ergänzend oder alternativ kann vorgesehen sein, dass man eine Vielzahl von Sollwerten für den Schweißstrom in der Grundstromphase, Sollwerten für den Schweißstrom in der Pulsstromphase, Pulsfrequenzwerten des Schweißstromes und/oder Änderungsgeschwindigkeitswerten des Schweißstromes beim Übergang von der Grundstromphase in die Pulsstromphase und von der Zwischenstromphase in die Grundstromphase unter Zuordnung von Führungsparametern im Speicherglied hinterlegt und dass man durch Vorgabe eines bestimmten Führungsparameters die diesem Führungsparameter zugeordneten Werte aus dem Speicherglied abruft und zur Bestimmung des Verlaufes des Schweißstromes heranzieht. Dies erleichtert die Handhabung des Schweißverfahrens.

Um eine Beschädigung der Schweißstromquelle und insbesondere auch eine Beschädigung des Schweißbrenners zu vermeiden, ist es von Vorteil, wenn man den Stromsollwert in der Zwischenstromphase auf einen vorgebbaren Maximalwert begrenzt. Bei einer derartigen Ausführungsform kann der Stromsollwert in der Zwischenstromphase somit unabhängig von den aktuellen Istwerten des Schweißstromes und der Ausgangsspannung der Schweißstromquelle einen vorgegebenen Maximalwert nicht überschreiten.

Von Vorteil ist es, wenn man den Stromsollwert in der Zwischenstromphase auf einen vorgebbaren Minimalwert begrenzt. Bei einer derartigen Ausgestaltung kann der Stromsollwert in der Zwischenstromphase unabhängig von den aktuellen Istwerten des Schweißstromes und der Ausgangsspannung der Schweißstromquelle einen vorgebbaren Minimalwert nicht unterschreiten. Dadurch ist sichergestellt, dass der Lichtbogen nicht erlischt.

Die Dauer der Zwischenstromphase ist bei einer besonders bevorzugten Ausgestaltung des erfindungsgemäßen Verfahrens auf einen Minimalwert begrenzt. Dadurch ist sichergestellt, dass die Zwischenstromphase in jedem Falle eine gewisse Mindestzeit andauert, so dass sich die Lichtbogenlänge stabilisieren kann.

Günstigerweise weist die Zwischenstromphase eine Dauer von 0,5 ms bis 10 ms auf.

Wie bereits erläutert, kann durch die Bereitstellung der Zwischenstromphase mit einem Stromsollwert, der vom aktuellen Stromistwert des Schweißstromes und vom aktuellen Spannungsistwert der Ausgangsspannung der Stromquelle abhängig ist, die Lichtbogenlänge stabilisiert werden. Während der Zwischenstromphase kann der Schweißstrom kurzfristig auf Änderungen des Lichtbogenwiderstandes reagieren. Eine weitere Stabilisierung der Lichtbogenlänge kann durch Änderung des Schweißstromes in der Grundstromphase und/oder durch eine Änderung der Pulsfrequenz des Schweißstromes erzielt werden. Derartige Änderungen erfolgen langsamer als die Änderung des Stromsollwertes in der Zwischenstromphase und führen zu einer langfristigen Stabilisierung der Lichtbogenlänge.

Von besonderem Vorteil ist es, wenn man einen Repräsentationsistwert erfasst, der den Verlauf des Schweißstromes in der Zwischenstromphase charakterisiert, und wenn man den Repräsentationsistwert mit einem Repräsentationssollwert vergleicht und auf Basis dieses Vergleichs die Stromsollwerte in der Zwischenstromphase und/oder in der Grundstromphase und/oder die Pulsfrequenz des Schweißstromes verändert. Bei einer derartigen Ausgestaltung des erfindungsgemäßen Verfahrens können in die Bestimmung des Schweißstromsollwertes der Zwischenstromphase nicht nur die aktuell gemessenen Istwerte des Schweißstromes und der Ausgangsspannung der Schweißstromquelle einfließen, sondern zusätzlich kann in die Bestimmung des Stromsollwertes der Zwischenstromphase auch der vorangegangene zeitliche Verlauf des Schweißstromes einfließen. Der Verlauf des Schweißstromes wird durch einen Repräsentationsistwert charakterisiert. Hierbei kann es sich beispielsweise um den über die Dauer der Zwischenstromphase gemittelten Schweißstrom handeln oder beispielsweise auch um den Istwert des Schweißstromes, der am Ende der Zwischenstromphase gemessen wird. Der Repräsentationsistwert kann mit einem Repräsentationssollwert verglichen werden. Hierbei kann es sich beispielsweise um einen vorgegebenen Stromwert handeln, der zwischen dem Maximalwert und dem Minimalwert des Stromsollwertes in der Zwischenstromphase liegt, insbesondere der aus dem Maximalwert und dem Minimalwert gebildete Mittelwert. In Abhängigkeit von einer Abweichung des Repräsentationsistwertes vom vorgebbaren Repräsentationssollwert kann dann der Stromsollwert der Zwischenstromphase verändert werden. Alternativ oder ergänzend kann der Stromsollwert der Grundstromphase und/oder die Pulsfrequenz des Schweißstromes verändert werden.

Günstig ist es, wenn man einen Repräsentationsistwert mit Maximal- und Minimalwerten des Stromsollwertes der Zwischenstromphase vergleicht und wenn man in Abhängigkeit vom Ergebnis des Vergleichs den Stromsollwert der Grundstromphase und/oder die Pulsfrequenz des Schweißstroms verändert. Bei einer derartigen Ausgestaltung des erfindungsgemäßen Verfahrens wird der Repräsentationsistwert mit dem vorgebbaren Maximalwert des Stromsollwertes der Zwischenstromphase und mit dem vorgebbaren Minimalwert des Stromsollwertes der Zwischenstromphase verglichen. Überschreitet der Repräsentationsistwert den Maximalwert des Stromsollwertes oder unterschreitet der Repräsentationsistwert den Minimalwert des Stromsollwertes der Zwischenstromphase, so wird der Stromsollwert der Grundstromphase verändert und/oder es wird die Pulsfrequenz des Schweißstromes verändert. Dies ermöglicht eine besonders wirksame Stabilisierung der Lichtbogenlänge. Erreicht der Repräsentationsistwert den Maximalwert oder den Minimalwert des Stromsollwertes, so deutet dies darauf hin, dass die Lichtbogenlänge nicht weiter durch eine Änderung des Stromsollwertes in der Zwischenstromphase stabilisiert werden kann, die durch Beeinflussung des Stromsollwertes in der Zwischenstromphase mögliche Lichtbogenlängenregelung hat vielmehr eine Art "Sättigung" erreicht. Um eine weitere Stabilisierung der Lichtbogenlänge zu erreichen, wird dann der Stromsollwert der Grundstromphase geändert und/oder es wird die Pulsfrequenz des Schweißstromes geändert.

Bei einer besonders bevorzugten Ausführungsform des erfindungsgemäßen Verfahrens vergleicht man den Repräsentationsistwert mit dem Repräsentationssollwert, und man regelt den Stromsollwert der Grundstromphase und/oder die Pulsfrequenz des Schweißstromes, wobei man einen vorgebbaren Sollwert der Regelung des Stromsollwertes bzw. der Pulsfrequenz oder einen Verstärkungsfaktor der Regelung des Stromsollwertes der Grundstromphase bzw. der Regelung der Pulsfrequenz des Schweißstromes in Abhängigkeit von einer Abweichung des Repräsentationsistwertes vom Repräsentationssollwert verändert. Bei einer derartigen Ausgestaltung regelt man zur langfristigen Stabilisierung der Lichtbogenlänge den Stromsollwert der Grundstromphase und/oder die Pulsfrequenz des Schweißstromes. Für diese Regelung wird in üblicher Weise ein vorgebbarer Sollwert mit einem Istwert verglichen. Als Istwert kann beispielsweise die über die Pulsdauer des Schweißstromes gemittelte Ausgangsspannung der Schweißstromsquelle verwendet werden. Der gemittelte Spannungswert stellt ein Maß für den mittleren Lichtbogenwiderstand und damit auch für die mittlere Lichtbogenlänge dar. Durch Erfassen der Ausgangsspannung der Schweißstromquelle können auch Anzahl, Zeitpunkte und Dauer von Kurzschlüssen im Lichtbogen während des Schweißens erfasst werden. Zur Regelung des Stromsollwertes der Grundstromphase und/oder zur Regelung der Pulsfrequenz des Schweißstromes kann man wie üblich den vorgebbaren Sollwert mit dem erfassten Istwert vergleichen. Die Regelung erfolgt in üblicher Weise unter Berücksichtigung eines Verstärkungsfaktors. Dieser Verstärkungsfaktor kann in Abhängigkeit von der Abweichung des Repräsentationsistwertes, der den Verlauf des Schweißstromes in der Zwischenstromphase charakterisiert, vom Repräsentationssollwert verändert werden. Damit kann der Verstärkungsfaktor auf eine Abweichung des Repräsentationsistwertes vom Repräsentationssollwert reagieren, das heißt die Regelung des Stromsollwertes der Grundstromphase und/oder die Regelung der Pulsfrequenz kann in Abhängigkeit vom Verlauf des Schweißstromes in der Zwischenstromphase erfolgen. In gleicher Weise kann man auch den Sollwert der Regelung des Stromsollwertes der Grundstromphase und/oder den Sollwert der Regelung der Pulsfrequenz des Schweißstromes in Abhängigkeit von der Abweichung des Repräsentationsistwertes vom vorgegebenen Repräsentationssollwert verändern. Bei einer derartigen Ausgestaltung des Verfahrens fließt in die Bestimmung des Sollwertes für die Regelung des Schweißstromes in der Grundstromphase und/oder der Pulsfrequenz des Schweißstromes der Verlauf des Schweißstromes in der Zwischenstromphase mit ein. Die kurzfristige Lichtbogenlängenregelung in der Zwischenstromphase beeinflusst somit die langfristige Lichtbogenlängenregelung, die durch Veränderung der Grundstromamplitude und/oder der Pulsfrequenz erzielt wird.

Günstig ist es, wenn man den Verstärkungsfaktor der Regelung des Stromsollwertes in der Grundstromphase und/oder der Regelung der Pulsfrequenz des Schweißstromes proportional oder integral-proportional zum Betrag der Abweichung des Repräsentationsistwertes vom vorgebbaren Repräsentationssollwert verändert. Je größer die Abweichung ist, desto höher kann der Verstärkungsfaktor gewählt werden.

Wie bereits erläutert, kann man zum Erfassen des Repräsentationsistwertes, der den Verlauf des Schweißstromes in der Zwischenstromphase charakterisiert, den Istwert des Schweißstromes in der Zwischenstromphase über die Dauer der Zwischenstromphase glätten. Eine derartige Glättung kann beispielsweise mittels eines RC-Gliedes erfolgen.

Wie eingangs erwähnt, betrifft die Erfindung nicht nur ein Lichtbogen-Schweißverfahren sondern auch eine Schweißstromquelle zur Durchführung des Verfahrens. Bei einer derartigen Schweißstromquelle wird die eingangs genannte Aufgabe erfindungsgemäß dadurch gelöst, dass mittels des Steuerteils Stromsollwerte der Grundstromphase, der Pulsstromphase und der Zwischenstromphase generierbar sind, wobei der Stromsollwert der Zwischenstromphase auf Basis eines vom Istwert des Schweißstromes und vom Istwert der Ausgangsspannung des Leistungsteils abhängigen Stromsollwert bestimmbar ist.

Bei der erfindungsgemäßen Schweißstromquelle wird der Schweißstrom in der Grundstromphase und in der Pulsstromphase so geregelt, dass sich jeweils ein konstanter Stromwert einstellt. Der Schweißstrom kann durch Vorgabe der der Regelung zugrunde liegenden Stromsollwerte derart gewählt werden, dass der Lichtbogen in der Grundstromphase nicht erlischt und dass in der Pulsstromphase zuverlässig ein einziger Tropfen von der Schweißelektrode abgelöst wird.

Die Stromsollwerte für die Regelung des Schweißstromes werden vom Steuerteil generiert. Die Stromsollwerte der Grundstromphase und der Pulsstromphase können vom Steuerteil in Abhängigkeit von Eingabewerten des Schweißers erzeugt werden. Sie können aber auch prozessabhängige Variable sein, die beispielsweise von gemittelten oder geglätteten Istwerten des Schweißstroms oder der Ausgangsspannung des Leistungsteils abhängen oder auch von sonstigen Prozessparametern. Im Gegensatz zum istwertabhängigen Stromsollwert der Zwischenstromphase weisen die Stromsollwerte der Grundstromphase und der Pulsstromphase innerhalb einer bestimmten Grundstrom- oder Pulsstromphase keine starken zeitlichen Schwankungen auf. Veränderungen können sich jedoch über mehrere Stromphasen ergeben. Dies wird nachfolgend noch näher erläutert.

Bei der erfindungsgemäßen Schweißstromquelle wird der Schweißstrom in der der Pulsstromphase anschließenden Zwischenstromphase auf Basis eines Stromsollwertes geregelt, in dessen Bestimmung der aktuelle Istwert des Schweißstromes und auch der aktuelle Istwert der Ausgangsspannung des Leistungsteiles einfließt. Dies ermöglicht es zum einen, in der Zwischenstromphase zusätzlichen Werkstoff von der Schweißelektrode abzulösen, der praktisch spritzerfrei in das Schweißbad gelangt, und zum anderen kann die Lichtbogenlänge stabilisiert werden. Dies wurde voranstehend bereits im Detail erläutert.

Bei einer vorteilhaften Ausgestaltung der erfindungsgemäßen Schweißstromquelle weist das Steuerteil ein Stromregelglied auf mit einem Sollwerteingang, dem in den einzelnen Stromphasen des Schweißstroms unterschiedliche Stromsollwerte bereitstellbar sind. Das Stromregelglied kann als analoger oder digitaler Stromregler ausgestaltet sein, wie sie dem Fachmann in vielfältiger Ausführungsform bekannt sind. Zur Regelung des Schweißstromes wird dem Stromregelglied in den einzelnen Stromphasen des Schweißstromes jeweils ein Sollwert bereitgestellt. Während der Grundstromphase und während der Pulsstromphase kann es sich um konstante Stromsollwerte handeln, wohingegen während der Zwischenstromphase der dem Stromregelglied bereitgestellte Stromsollwert abhängig ist vom aktuellen Istwert des Schweißstromes und vom aktuellen Istwert der Ausgangsspannung des Leistungsteils.

Der Sollwerteingang des Stromregelgliedes ist bei einer vorteilhaften Ausführungsform der erfindungsgemäßen Schweißstromquelle über eine elektrisch steuerbare Schalteinrichtung während der Grundstromphase und während der Pulsstromphase mit einem ersten Sollwertbestimmungsglied und während der Zwischenstromphase mit einem zweiten Sollwertbestimmungsglied verbindbar, wobei das zweite Sollwertbestimmungsglied mit einem Stromistwerterfassungsglied zur Erfassung des Istwertes des Schweißstromes und mit einem Spannungsistwerterfassungsglied zur Erfassung des Istwertes der Ausgangsspannung des Leistungsteiles verbunden ist. Bei einer derartigen Ausgestaltung können die Stromsollwerte für die Regelung des Schweißstromes während der Grundstromphase und während der Pulsstromphase von einem ersten Sollwertbestimmungsglied bereitgestellt werden, und der Stromsollwert für die Regelung des Schweißstromes in der Zwischenstromphase wird von einem zweiten Sollwertbestimmungsglied bereitgestellt. Beide Sollwertbestimmungsglieder sind über eine steuerbare Schalteinrichtung mit dem Sollwerteingang des Stromregelgliedes verbunden. Die Schalteinrichtung schaltet zyklisch die Verbindung zwischen dem ersten Sollwertbestimmungsglied und dem Sollwerteingang und zwischen dem zweiten Sollwertbestimmungsglied und dem Sollwerteingang. Die Erfassung der Istwerte des Schweißstromes und der Ausgangsspannung des Leistungsteiles erfolgt mittels eines Stromistwerterfassungsgliedes und eines Stromsollwerterfassungsgliedes. Diese sind mit dem zweiten Sollwertbestimmungsglied verbunden, so dass das zweite Sollwertbestimmungsglied auf Grundlage der aktuellen Istwerte des Schweißstromes und der Ausgangsspannung - gegebenenfalls unter Berücksichtigung von Korrekturfaktoren, wie sie voranstehend im Einzelnen erläutert wurden - den Stromsollwert der Zwischenstromphase bestimmt, der dann über die Schalteinrichtung an den Sollwerteingang des Stromregelgliedes übertragen wird.

Günstigerweise umfasst das Steuerteil ein Speicherglied zum Abspeichern von Korrekturfaktoren, die in die Bestimmung des Stromsollwertes der Zwischenstromphase einfließen.

Von Vorteil ist es, wenn der Stromsollwert der Grundstromphase und/oder die Pulsfrequenz des Schweißstroms mittels des Steuerteils regelbar sind. Wie bereits erläutert, ermöglicht dies eine langfristige Stabilisierung der Lichtbogenlänge, da diese nicht nur durch eine kurzfristige Veränderung des Stromsollwertes der Zwischenstromphase stabilisiert werden kann sondern zusätzlich auch durch eine langfristige Veränderung des Stromsollwertes in der Grundstromphase und/oder durch eine Veränderung der Pulsfrequenz des Schweißstroms.

Von Vorteil ist es, wenn das Steuerteil ein Repräsentationsistwerterfassungsglied aufweist zum Erfassen eines Repräsentationsistwertes, der den Verlauf des Schweißstroms in der Zwischenstromphase charakterisiert, wobei dem Repräsentationsistwerterfassungsglied ein Vergleichsglied nachgeordnet ist zum Vergleich des Repräsentationsistwertes mit einem Repräsentationssollwert. Mit Hilfe des Repräsentationsistwerterfassungsgliedes kann ein Repräsentationsistwert erfasst werden, der den Verlauf des Schweißstromes in der Zwischenstromphase charakterisiert. Hierbei kann es sich beispielsweise um den über die Dauer der Zwischenstromphase gemittelten Schweißstrom handeln. Dieser Stromwert kann in einem Vergleichsglied mit einem Repräsentationssollwert verglichen werden. Liegt eine Abweichung vor, so kann der Verlauf des Schweißstromes verändert werden.

Günstigerweise sind die Stromsollwerte der Grundstromphase und/oder der Zwischenstromphase und/oder die Pulsfrequenz des Schweißstromes in Abhängigkeit von der Abweichung des Repräsentationsistwertes vom Repräsentationssollwert regelbar. Wie bereits erläutert, kann dadurch eine außerordentlich stabile Lichtbogenlängenregelung erzielt werden, wobei eine kurzfristige Stabilisierung der Lichtbogenlänge mit Hilfe der Regelung des Stromsollwertes der Zwischenstromphase und eine langfristige Stabilisierung der Lichtbogenlänge mit Hilfe einer Regelung des Stromsollwertes der Grundstromphase und/oder einer Regelung der Pulsfrequenz des Schweißstromes erzielt wird.

Die erfindungsgemäße Schweißstromquelle kann als analoger oder digitaler Schaltkreis ausgestaltet sein. Insbesondere kann vorgesehen sein, dass das Steuerteil einen programmierbaren Mikrocontroller aufweist. Die Regelung des Stromsollwertes der Zwischenstromphase kann dadurch ebenso wie die Regelung der Stromsollwerte der Grundstromphase und der Pulsstromphase und auch die Regelung der Pulsfrequenz des Schweißstromes softwaretechnisch erfolgen.

Die nachfolgende Beschreibung einer bevorzugten Ausführungsform der Erfindung dient im Zusammenhang mit der Zeichnung der näheren Erläuterung. Es zeigen:

Figur 1:    eine schematische Darstellung einer Schweißeinrichtung mit einer erfindungsgemäßen Schweißstromquelle und einem Schweißbrenner, dem kontinuierlich eine Schweißelektrode zugeführt wird;

Figur 2:    eine schematische Darstellung eines Steuerteils der Schweißstromquelle aus Figur 1;

Figur 3:    eine schematische Darstellung des zeitlichen Verlaufs des Schweißstroms, der von der Schweißstromquelle der Schweißelektrode bereitgestellt wird;

Figur 4:    eine schematische Darstellung des Lichtbogens zwischen der Schweißelektrode und einem zu schweißenden Werkstück;

Figur 5:    eine schematische Darstellung eines Repräsentationsistwerterfassungsgliedes des Steuerteils aus Figur 2;

Figur 6:    ein Blockschaltbild einer Schaltung des Steuerteils aus Figur 2 zur Veränderung eines Verstärkungsfaktors einer Regelung in Abhängigkeit von einem Repräsentationsistwert, und

Figur 7: ein Blockschaltbild einer Schaltung des Steuerteils aus Figur 2 zur Veränderung eines Sollwertes einer Regelung in Abhängigkeit von einem Repräsentationsistwert.

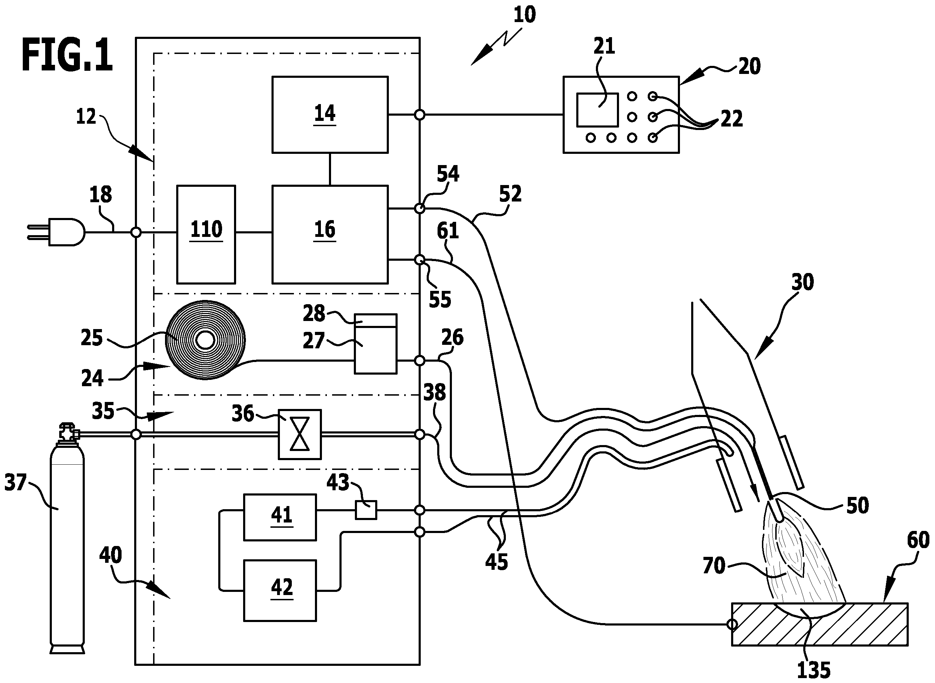

In Figur 1 ist schematisch eine Schweißeinrichtung dargestellt, die insgesamt mit dem Bezugszeichen 10 belegt ist. Sie umfasst eine erfindungsgemäße Schweißstromquelle 12, die ein Steuerteil 14 und ein Leistungsteil 16 aufweist. Mittels des Steuerteils 14 kann das Leistungsteil 16 gesteuert werden zur Abgabe eines gepulsten Schweißstroms. Über ein Versorgungskabel 18 kann die Stromquelle 12 mit einem Energieversorgungsnetz, insbesondere mit einem öffentlichen Versorgungsnetz, beispielsweise mit einem 230 V oder 400 V Wechselspannungsnetz, verbunden werden.

Die Schweißeinrichtung 10 weist eine Bedieneinheit 20 auf mit einem berührungsempfindlichen Bildschirm (Touch Screen) 21 und mit Bedienelementen 22, die beispielsweise als Drehknöpfe oder Taster ausgestaltet sein können. Die Bedieneinheit 20 steht mit dem Steuerteil 14 in elektrischer Verbindung.

Die Schweißeinrichtung 10 weist auch eine Schweißdrahtvorschubeinrichtung 24 auf mit einer Vorratstrommel 25 für Schweißdraht 26, der einem Schweißbrenner 30 der Schweißeinrichtung 10 mittels eines Antriebsmotors 27 kontinuierlich zugeführt werden kann. Dem Antriebsmotor 27 ist ein Motorsteuerungsglied 28 zugeordnet, das über an sich bekannte und deshalb in der Zeichnung nicht dargestellte Verbindungsleitungen mit dem Steuerteil 14 verbunden ist. Mittels des Motorsteuerungsgliedes 28 kann die Drehzahl des Antriebsmotors 27 geregelt werden zur Erzielung einer gewünschten Vorschubgeschwindigkeit, mit der der Schweißdraht 26 dem Schweißbrenner 30 zugeführt wird.

Die Schweißeinrichtung 10 weist außerdem eine Gaszufuhreinrichtung 35 auf mit einem steuerbaren Strömungsregler 36. Der steuerbare Strömungsregler 36 steht über in der Zeichnung nicht dargestellte Steuerleitungen mit dem Steuerteil 14 in elektrischer Verbindung. Vom Benutzer kann mittels der Bedieneinheit 20 ein bestimmter Gasvolumenstrom vorgegeben werden, das heißt eine bestimmte Menge an Schutzgas, die dem Schweißbrenner 30 pro Zeiteinheit aus einem Gasvorrat 37 über eine Gasleitung 38 zugeführt wird.

Die Schweißeinrichtung 10 weist auch eine Kühlmittelzufuhreinrichtung 40 auf mit einer Kühlmittelpumpe 41, einem Wärmetauscher 42 und einem Durchflusssensor 43. Mit Hilfe des Durchflusssensors 43 kann die dem Schweißbrenner 30 über eine Kühlmittelleitung 45 pro Zeiteinheit zugeführte Kühlmittelmenge erfasst werden, und mittels der steuerbaren Kühlmittelpumpe 41, die über in der Zeichnung nicht dargestellte Steuerleitungen mit dem Steuerteil 14 verbunden ist, kann eine gewünschte Kühlmittelmenge vorgegeben werden, die pro Zeiteinheit dem Schweißbrenner 30 zugeführt werden soll. Mit Hilfe des Wärmetauschers 42 kann das Kühlmittel, vorzugsweise Wasser, fortlaufend gekühlt werden.

Das freie Ende des dem Schweißbrenner 30 zugeführten Schweißdrahtes 26 bildet eine abschmelzende Schweißelektrode 50 aus, die über eine erste Stromleitung in Form eines Stromkabels 52 an einen ersten Ausgang 54 des Leistungsteils 16 der Stromquelle 12 angeschlossen werden kann. Ein zu schweißendes Werkstück 60 kann über eine zweite Stromleitung in Form eines Massekabels 61 an einen zweiten Ausgang 55 des Leistungsteils 16 angeschlossen werden.

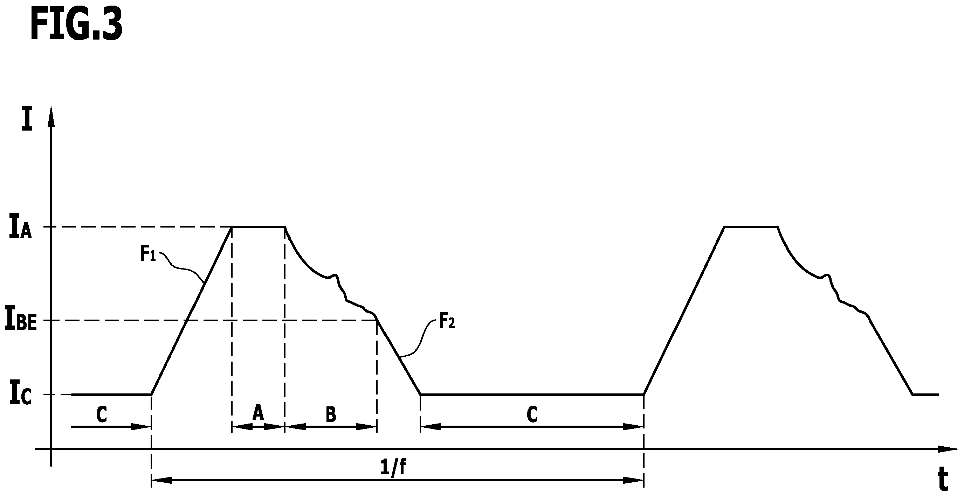

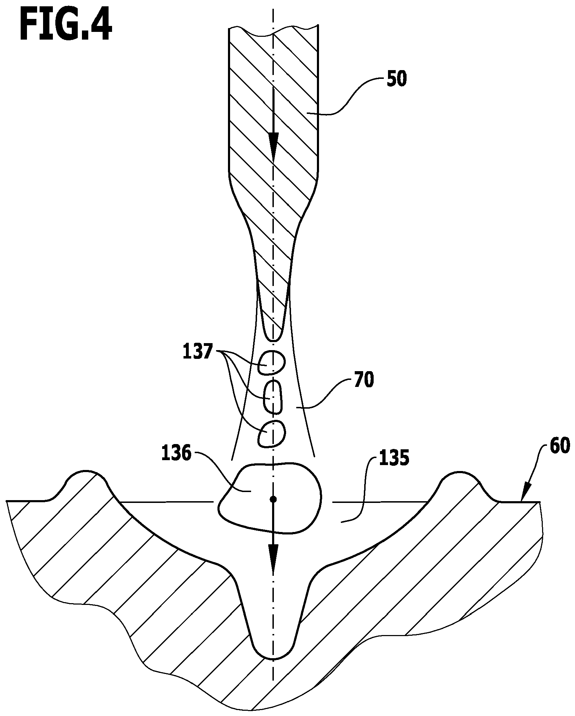

Während des Betriebs der Schweißeinrichtung 10 bildet sich zwischen der Schweißelektrode 50 und dem Werkstück 60 ein Lichtbogen 70 aus, der in Figur 4 vergrößert dargestellt ist. Vom Leistungsteil 16 der Stromquelle 12 wird der Schweißelektrode 50 ein gepulster Schweißstrom bereitgestellt, dessen zeitlicher Verlauf in Figur 3 veranschaulicht ist. Der Schweißstrom weist eine Grundstromphase C mit einer Grundstromamplitude $I_C$ auf sowie eine Pulsstromphase A mit einer Pulsstromamplitude $I_A$. Über eine ansteigende Stromflanke F1, die in Figur 3 beispielhaft in Form eines linearen Stromanstiegs veranschaulicht ist, geht die Grundstromamplitude $I_C$ in die Pulsstromamplitude $I_A$ über. An die Pulsstromphase A schließt sich eine Zwischenstromphase B an, an deren Ende der Schweißstrom eine Amplitude $I_{BE}$ hat. Über eine abfallende Stromflanke F2, die in Figur 3 beispielhaft als linearer Stromabfall dargestellt ist, geht die Zwischenstromphase B in die Grundstromphase C über. Dieser Ablauf wiederholt sich mit der Periodendauer 1/f, wobei mit f die Pulsfrequenz des Schweißstroms bezeichnet wird. Die Grundstromamplitude $I_C$ kann beispielsweise 100 A bis 250 A betragen. Die Pulsstromamplitude $I_A$ beträgt beispielsweise 150 A bis 580 A.

Die Grundstromphase C dauert typischerweise etwa 2 bis 2,5 ms und die Pulsstromphase A dauert typischerweise etwa 1,8 bis 2,4 ms. Die Dauer der Zwischenstromphase B ist im dargestellten Ausführungsbeispiel länger gewählt als die Dauer der Pulsstromphase A, sie ist jedoch kürzer als die Dauer der Grundstromphase C.

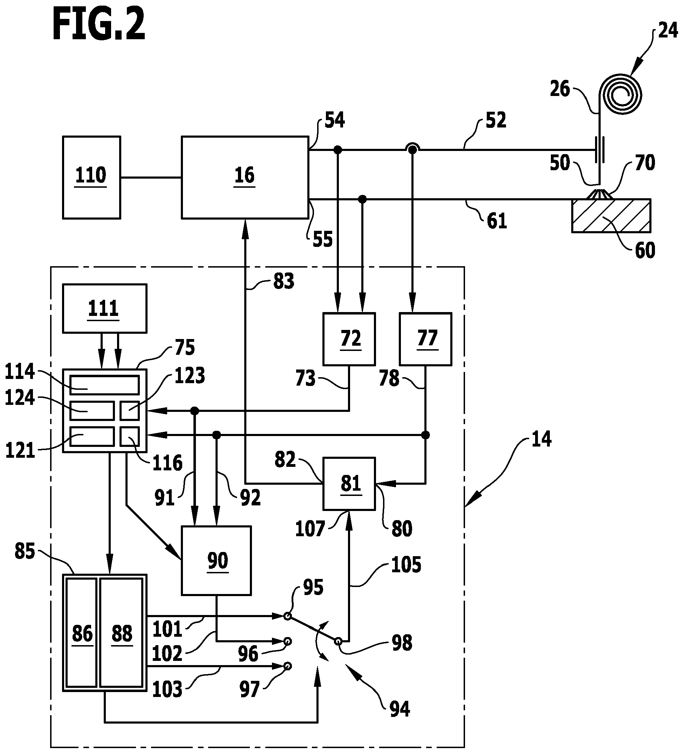

Der in Figur 3 dargestellte Verlauf des Schweißstromes wird mittels des Steuerteils 14 geregelt. In Figur 2 ist das Steuerteil 14 nach Art eines Blockschaltbildes schematisch veranschaulicht. Es umfasst ein Spannungsistwerterfassungsglied 72, das die Ausgangsspannung des Leistungsteils 16 erfasst und über eine erste Signalleitung 73 mit einem zentralen Steuerglied 75 verbunden ist. Außerdem umfasst das Steuerteil 14 ein Stromistwerterfassungsglied 77, das den Istwert des über das Stromkabel 52 vom Leistungsteil 16 zur Schweißelektrode 50 fließenden Schweißstromes erfasst und über eine zweite Signalleitung 78 mit dem zentralen Steuerglied 75 verbunden ist.

Das Stromistwerterfassungsglied 77 steht darüber hinaus mit einem Istwerteingang 80 eines Stromreglers 81 in Verbindung, dessen Ausgang 82 über eine Steuerleitung 83 mit dem Leistungsteil 16 verbunden ist.

Das zentrale Steuerglied 75 steht mit einem Funktionsgenerator 85 in elektrischer Verbindung, der einen Taktgenerator 86 sowie ein erstes Sollwertvorgabeglied 88 umfasst. Außerdem steht das zentrale Steuerglied 75 mit einem zweiten Sollwertvorgabeglied 90 in elektrischer Verbindung, dem über eine von der ersten Signalleitung 73 abzweigende erste Zweigleitung 91 vom Spannungsistwerterfassungsglied 72 ein aktueller Istwert der Ausgangsspannung des Leistungsteils 16 und über eine von der zweiten Signalleitung 78 abzweigende zweite Zweigleitung 92 vom Stromistwerterfassungsglied 77 ein aktueller Istwert des Schweißstromes bereitgestellt werden.

Das Steuerteil 14 umfasst eine vom Taktgenerator 86 elektrisch steuerbare Schalteinheit 94 mit einem ersten Eingang 95, einem zweiten Eingang 96 und einem dritten Eingang 97 sowie einem gemeinsamen Ausgang 98, der zyklisch mit dem ersten Eingang 95, dem zweiten Eingang 96 und dem dritten Eingang 97 verbindbar ist in Abhängigkeit von einem Taktsignal, das vom Taktgenerator 86 bereitgestellt wird. Das erste Sollwertvorgabeglied 88 steht über eine erste Verbindungsleitung 101 mit dem ersten Eingang 95 der Schalteinheit 94 und über eine dritte Verbindungsleitung 103 mit dem dritten Eingang 97 der Schalteinheit 94 in elektrischer Verbindung. Das zweite Sollwertvorgabeglied 90 steht über eine zweite Verbindungsleitung 102 mit dem zweiten Eingang 96 der Schalteinheit 94 in elektrischer Verbindung. Der Ausgang 98 der Schalteinheit 94 ist über eine Sollwertvorgabeleitung 105 mit einem Sollwerteingang 107 des Stromreglers 81 verbunden. Über den Sollwerteingang 107 kann somit dem Stromregler 81 ein Stromsollwert vorgegeben werden, der vom Stromregler 81 mit einem am Istwerteingang 80 anliegenden Stromistwert verglichen werden kann. In Abhängigkeit von einer Abweichung des Stromistwertes vom Stromsollwert steuert der Stromregler 81 über die Steuerleitung 83 das Leistungsteil, so dass der über das Stromkabel 52 fließende Schweißstrom entweder erhöht, verringert oder beibehalten wird. Zur Energieversorgung ist das Leistungsteil 16 eingangsseitig mit einem Netzversorgungsteil 110 verbunden, an das das in Figur 1 dargestellte Versorgungskabel 18 angeschlossen ist.

Das Steuerteil 14 weist darüber hinaus eine übergeordnete Steuereinrichtung 111 auf, die sowohl mit dem zentralen Steuerglied 75 in elektrischer Verbindung steht als auch mit der Bedieneinheit 20, dem Motorsteuerungsglied 28 der Schweißdrahtvorschubeinrichtung 24, dem Strömungsregler 36, der Gaszufuhreinrichtung 35 und der Kühlmittelpumpe 41 der Kühlmittelzufuhreinrichtung 40.

Das zentrale Steuerglied 75 umfasst ein Speicherglied 114, in dem nachstehend näher erläuterte Korrekturfaktoren zur Bestimmung des Stromsollwertes der Zwischenstromphase B ebenso hinerlegt werden können wie ein Maximalwert des Stromsollwertes der Zwischenstromphase, ein Minimalwert des Stromsollwertes der Zwischenstromphase und auch Stromsollwerte für die Pulsstromphase A und die Grundstromphase C. Darüber hinaus können im Speicherglied 114 Werte für die Steilheit der die Grundstromphase C mit der Pulsstromphase A verbindenden ansteigenden Stromflanke F1 und der die Zwischenstromphase B mit der Grundstromphase C verbindenden abfallenden Stromflanke F2 hinterlegt werden.

Um die Handhabung der Stromquelle 12 zu vereinfachen, werden eine Vielzahl der voranstehend genannten Faktoren und Werte jeweils unter Zuordnung eines Führungsparameters im Speicherglied 114 hinterlegt, der vom Benutzer über die Bedieneinheit 20 und die daran angeschlossene übergeordnete Steuereinrichtung 111 dem zentralen Steuerglied 75 eingegeben werden können. Als Führungsparameter kann beispielsweise ein über die gesamte Pulsdauer des Schweißstromes gemittelter Stromwert oder auch die Drahtvorschubgeschwindigkeit für den Schweißdraht 26 zum Einsatz kommen. Gibt der Benutzer einen bestimmten Wert für den Führungsparameter ein, so werden im Speicherglied 114 die zugeordneten Faktoren und Werte abgerufen und für die Regelung des Schweißstromes herangezogen.

Der Taktgenerator 86 stellt der steuerbaren Schalteinheit 94 ein der gewünschten Pulsfrequenz f des Schweißstromes und den Dauern der einzelnen Stromphasen A, B und C entsprechendes Taktsignal bereit, aufgrund dessen die Schalteinheit 94 zyklisch eine elektrische Verbindung zwischen dem ersten Eingang 95 und dem Ausgang 98, dem zweiten Eingang 96 und dem Ausgang 98 und dem dritten Eingang 97 und dem Ausgang 98 herstellt. Über den ersten Eingang 95 kann dem Stromregler 81 vom ersten Sollwertvorgabeglied 88 ein Stromsollwert in der Pulsstromphase A vorgegeben werden. Über den zweiten Eingang 96 kann dem Stromregler 81 vom zweiten Sollwertvorgabeglied 90 ein Stromsollwert in der Zwischenstromphase B vorgegeben werden, und über den dritten Eingang 97 kann dem Stromregler 91 vom ersten Sollwertvorgabeglied 88 ein Stromsollwert in der Grundstromphase C bereitgestellt werden.

Die Bestimmung des Stromsollwertes in der Zwischenstromphase B erfolgt vom zweiten Sollwertvorgabeglied 90 dergestalt, dass es eine Summe bildet aus dem aktuellen Stromistwert $I_{ist}$ und der mit einem Korrekturfaktor K4 gewichteten Abweichung des vom Spannungsistwerterfassungsglied 77 bereitgestellten aktuellen Spannungsistwert $U_{ist}$ von einem aus dem Speicherglied 114 des zentralen Steuergliedes 75 abgerufenen Spannungsfestwertes $U_{fest}$ sowie der mit einem weiteren Korrekturfaktor K5 gewichteten Abweichung des aktuellen Stromistwertes $I_{ist}$ von einem aus dem Speicherglied 114 des zentralen Steuergliedes 75 abgerufenen Stromfestwertes. Der in der Zwischenstromphase B vom zweiten Sollwertvorgabeglied 90 bereitgestellte Stromsollwert für den Stromregler 81 kann wie folgt dargestellt werden:

$$I_{soll} = I_{ist} + K4 * (U_{fest} - U_{ist}) + K5 * (I_{fest} - I_{ist})$$

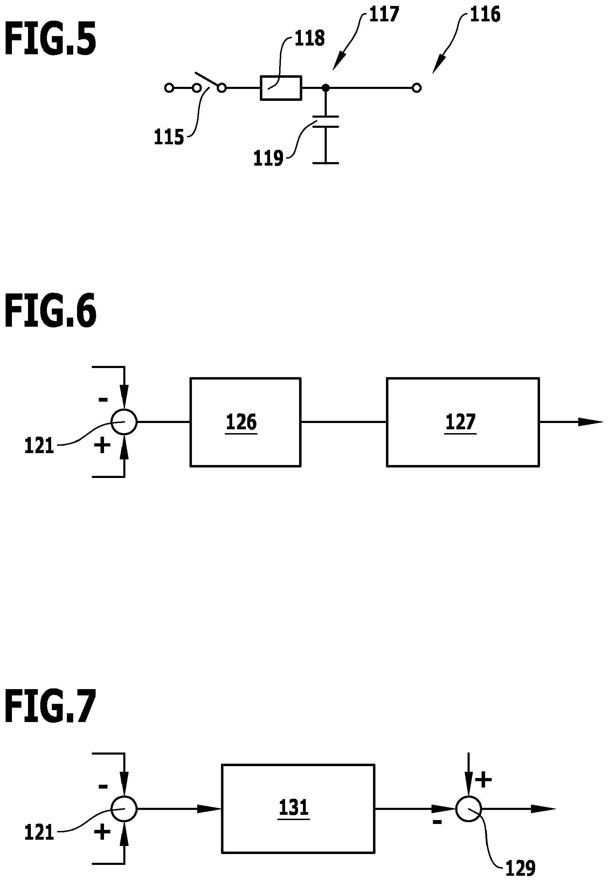

Wie bereits erwähnt, können die Faktoren K4 und K5 ebenso wie der Spannungsfestwert $U_{fest}$ und der Stromfestwert $I_{fest}$ im Speicherglied 114 hinterlegt und bedarfsweise abgerufen werden. Es kann allerdings auch vorgesehen sein, dass der Spannungsfestwert $U_{fest}$ und der Stromfestwert $I_{fest}$ und/oder die Korrekturfaktoren K4 und K5 in Abhängigkeit von einem Repräsentationsistwert gebildet werden, der den Verlauf des Schweißstromes in der Zwischenstromphase B charakterisiert. Das zentrale Steuerglied 75 weist hierzu ein Repräsentationsistwerterfassungsglied 116 auf, das in Figur 5 schematisch dargestellt ist und einen elektronischen Schalter 115 sowie ein RC-Glied 117 mit einem ohmschen Widerstand 118 und einem Kondensator 119 aufweist. Während der Zwischenstromphase B ist der Schalter 115 geschlossen, so dass sich der Kondensator 119 auflädt. Nach Ablauf der Zwischenstromphase B wird der Schalter 115 geöffnet und die am Kondensator 119 anliegende Spannung kann als Repräsentationsistwert abgerufen werden. Letzterer charakterisiert den Verlauf des Schweißstroms während der Zwischenstromphase. Mittels eines ersten Vergleichsgliedes 121 des zentralen Steuergliedes 75 kann der Repräsentationsistwert mit einem im Speicherglied 114 hinterlegten Repräsentationssollwert verglichen werden. Liegt eine Abweichung zwischen den beiden Werten vor, so können die Korrekturfaktoren K4 und K5 und/oder der Spannungsfestwert $U_{fest}$ und der Stromfestwert $I_{fest}$ verändert werden.

Der Repräsentationsistwert kann mittels des ersten Vergleichsgliedes 121 auch mit vorgebbaren Maximal- und Minimalwerten des Stromsollwertes $I_{soll}$ der Zwischenstromphase verglichen werden. Überschreitet der Repräsentationsistwert den Maximalwert des Stromsollwertes der Zwischenstromphase oder unterschreitet er den Minimalwert des Stromsollwertes der Zwischenstromphase, so kann vom zentralen Steuerglied 75 an den Funktionsgenerator 85 ein Steuersignal übertragen werden, um die Pulsfrequenz des Taktgenerators 86 und/oder den Stromsollwert des ersten Sollwertvorgabegliedes 88 für die Grundstromphase C zu verändern.

Eine Änderung des Stromsollwertes in der Grundstromphase C und/oder der Pulsfrequenz des Schweißstromes kann auch in Abhängigkeit von einem über die gesamte Pulsdauer gemittelten Spannungswert erfolgen, der von einem Mittelwertbilder 123 des zentralen Steuergliedes 75 bereitgestellt und mit Hilfe eines zweiten Vergleichsgliedes 124 mit einem vorgebbaren und im Speicherglied 114 hinterlegbaren mittleren Spannungssollwert vergleichbar ist. Der zeitliche Mittelwert der Ausgangsspannung des Leistungsteiles 16 bildet ein Maß für den gemittelten Lichtbogenwiderstand. Der gemittelte Spannungswert ist umso größer, je größer der Mittelwert des Lichtbogenwiderstandes ist. In Abhängigkeit vom gemittelten Lichtbogenwiderstand können somit der Stromsollwert für die Grundstromphase C und/oder die Pulsfrequenz des Schweißstromes geregelt werden.

Die Regelung des Stromsollwertes in der Grundstromphase C und/oder die Regelung der Pulsfrequenz des Schweißstromes erfolgt in üblicher Weise unter Berücksichtigung eines vorgebbaren Verstärkungsfaktors. Dieser Verstärkungsfaktor wiederum kann in Abhängigkeit von dem den Verlauf des Schweißstromes in der Zwischenstromphase charakterisierenden Repräsentationsistwert erfolgen. Hierzu kann der vom Repräsentationsistwerterfassungsglied 116 bereitgestellte Repräsentationsistwert mittels des ersten Vergleichsgliedes 121 mit einem vorgegebenen Repräsentationssollwert verglichen werden. Wie in Figur 6 dargestellt ist, ist dem ersten Vergleichsglied 121 ein Betragsbildner 126 nachgeordnet, der an ein Glättungsglied 127 angeschlossen ist. Der Betragsbildner 126 bildet den Betrag der Abweichung des Repräsentationsistwertes vom Repräsentationssollwert. Dieser Betrag wird anschließend vom Glättungsglied 127 geglättet, um kurzzeitige Schwankungen des Betrags und damit auch kurzzeitige Änderungen des Schweißstromes zu mitteln. Das Glättungsglied 127 gibt dann ein Signal aus zur Bildung des Verstärkungsfaktors für die Regelung des Stromsollwertes in der Grundstromphase C und/oder für die Regelung der Pulsfrequenz.

Der Sollwert für die Regelung des Stromsollwertes der Grundstromphase und/oder der Pulsfrequenz des Schweißstromes kann von einem Verknüpfungsglied 129 des zentralen Steuergliedes 75 mit einem Ausgangssignal eines zweiten Glättungsgliedes 131 verknüpft werden, das eingangsseitig mit dem ersten Vergleichsglied 121 verbunden ist, das den vom Repräsentationsistwerterfassungsglied 116 bereitgestellten Repräsentationsistwert mit einem Repräsentationssollwert vergleicht. Dies gibt die Möglichkeit, den Sollwert für die Regelung des Stromsollwertes der Grundstromphase C und/oder der Pulsfrequenz des Schweißstromes in Abhängigkeit vom Verlauf des Schweißstromes in der Zwischenstromphase B zu verändern.

Durch die Bereitstellung eines Schweißstromes mit dem voranstehend erläuterten zeitlichen Verlauf wird zwischen der Schweißelektrode 50 und einem in Figur 4 dargestellten Schmelzbad 135 des Werkstückes 60 der Lichtbogen 70 erzeugt. Hierbei verflüssigt sich die Schweißelektrode 50, so dass sich am Ende der Pulsstromphase A ein erster, relativ großer Tropfen 136 ausbildet und von der Spitze der Schweißelektrode 50 in Richtung Schmelzbad 135 ablöst. In der sich unmittelbar an die Pulsstromphase A anschließenden Zwischenstromphase B weist der Schweißstrom einen Verlauf auf, der von der Abweichung des Stromistwertes vom vorgegebenen Stromfestwert und von der Abweichung des Spannungsistwertes vom vorgegebenen Spannungsfestwert abhängig ist, wobei die Abweichungen jeweils mit Korrekturfaktoren gewichtet werden. Der Schweißstrom ist in der Zwischenstromphase B vom Lichtbogenwiderstand und damit von der Lichtbogenlänge abhängig. Liegt ein verhältnismäßig kurzer Lichtbogen vor, so stellt sich ein relativ hoher Schweißstrom ein, der zur Folge hat, dass sich in der Zwischenstromphase B weitere kleinvolumige Tröpfchen 137 nach dem ersten großen Tropfen 136 sprühregenartig von der Schweißelektrode ablösen, bis die Amplitude des Schweißstroms nach Ablauf der Zwischenstromphase B weiter abgesenkt und die zur Ausbildung eines Sprühlichtbogens kritische Stromstärke unterschritten wird. Statt mehrerer kleinerer Tröpfchen 137 kann sich nach dem ersten großen Tropfen 136 bei Vorliegen eines relativ kurzen Lichtbogens auch Werkstoffmaterial in Form eines Flüssigkeitszylinders mit kleinem Durchmesser ablösen.

Liegt dagegen in der Zwischenstromphase B ein verhältnismäßig langer Lichtbogen vor, so hat dies zur Folge, dass der Schweißstrom in der Zwischenstromphase B einen verhältnismäßig geringen Wert annimmt, wobei dann nur wenige kleinvolumige Tröpfchen 137 oder gar überhaupt kein Werkstoffmaterial in der Zwischenstromphase B abgelöst wird.

Da dem Schweißbrenner 30 kontinuierlich Schweißdraht 26 zugeführt wird, der die abschmelzende Schweißelektrode 50 ausbildet, hat die vom Widerstand des Lichtbogens 70 abhängende Regelung des Schweißstromes in der Zwischenstromphase B eine Stabilisierung der Lichtbogenlänge zur Folge, denn bei großer Lichtbogenlänge verringert sich in der Zwischenstromphase B der Schweißstrom, so dass nur weinig Werkstoffmaterial von der Schweißelektrode 50 abgelöst wird und die kontinuierliche Zuführung von Schweißdraht 26 zu einer allmählichen Verringerung der Lichtbogenlänge führt. Liegt in der Zwischenstromphase zunächst eine geringe Lichtbogenlänge vor, so hat der damit verbundene geringe Lichtbogenwiderstand einen großen Schweißstrom in der Zwischenstromphase B zur Folge. Dies führt zu einer starken Ablösung von flüssigem Werkstoffmaterial von der Schweißelektrode 50 und damit zu einer Erhöhung der Lichtbogenlänge.

Die Regelung des Stromsollwertes in der Zwischenstromphase B in Abhängigkeit vom Istwert der Ausgangsspannung des Leistungsteils 16 und in Abhängigkeit vom Istwert des über das Stromkabel 52 fließenden Schweißstromes bildet somit eine Lichtbogenlängenregelung, die sehr kurzfristig reagiert.

Eine langfristige Lichtbogenlängenregelung wird ergänzend durch die Regelung des Stromsollwertes der Grundstromphase C und/oder durch die Regelung der Pulsfrequenz des Schweißstromes erzielt. Diese Regelung erfolgt unter Berücksichtigung des zeitlichen Mittelwertes der Ausgangsspannung des Leistungsteiles 16 und unter Berücksichtigung des Verlaufs des Schweißstroms in der Zwischenstromphase B. Hierzu werden, wie bereits erläutert, der Verstärkungsfaktor und/oder der Sollwert der Regelung des Stromsollwertes der Grundstromphase C und/oder der Regelung der Pulsfrequenz des Schweißstromes unter Berücksichtigung der Abweichung des Repräsentationsistwertes von einem vorgegebenen Repräsentationssollwert verändert. Somit beeinflusst die auf Basis der Regelung des Stromsollwertes der Zwischenstromphase B erfolgende schnelle Lichtbogenlängenregelung die verhältnismäßig langsame Lichtbogenlängenregelung, die auf der Regelung des Stromsollwertes der Grundstromphase C und/oder der Pulsfrequenz des Schweißstromes basiert.

Die Schweißstromquelle 12 zeichnet sich somit durch eine hohe Abschmelzleistung und durch eine stabile Lichtbogenlänge aus. Die hohe Abschmelzleistung wird erzielt, da in der Zwischenstromphase B ein zusätzlicher Werkstoffübergang von der Schweißelektrode 50 zum Werkstück 60 erfolgen kann, und die stabile Lichtbogenlänge wird erzielt durch die vom Lichtbogenwiderstand abhängige Regelung des Schweißstromsollwertes der Zwischenstromphase B und durch die vom Verlauf des Schweißstromes in der Zwischenstromphase abhängige Regelung des Stromsollwertes in der Grundstromphase C und/oder der Pulsfrequenz des Schweißstromes.

**Patentansprüche**

1. Lichtbogen-Schweißverfahren, bei dem zwischen einer einem Schweißbrenner kontinuierlich zugeführten abschmelzenden Schweißelektrode und einem Werkstück ein elektrischer Lichtbogen in einer Schutzgasatmosphäre brennt und von der Schweißelektrode abgeschmolzener Werkstoff in ein Schmelzbad auf dem Werkstück übergeht, wobei der Schweißelektrode von einer Schweißstromquelle ein gepulster Schweißstrom zugeführt wird, der eine Grundstromphase, eine Pulsstromphase und eine an die Pulsstromphase anschließende Zwischenstromphase aufweist, **dadurch gekennzeichnet, dass** man den Schweißstrom in der Zwischenstromphase auf Basis eines Stromsollwertes regelt, den man in Abhängigkeit vom Stromistwert des Schweißstromes und vom Spannungsistwert der Ausgangsspannung der Schweißstromquelle bestimmt.

2. Lichtbogen-Schweißverfahren nach Anspruch 1, **dadurch gekennzeichnet, dass** man den Stromsollwert der Zwischenstromphase unter Berücksichtigung von Korrekturfaktoren bestimmt.

3. Lichtbogen-Schweißverfahren nach Anspruch 1 oder 2, **dadurch gekennzeichnet, dass** man für die Bestimmung des Stromsollwertes der Zwischenstromphase die Summe bildet aus dem Stromistwert des Schweißstromes und dem Spannungsistwert der Ausgangsspannung der Schweißstromquelle, wobei man den Stromistwert und den Spannungsistwert jeweils mit einem Korrekturfaktor gewichtet.

4. Lichtbogen-Schweißverfahren nach Anspruch 1, 2 oder 3, **dadurch gekennzeichnet, dass** man den Stromsollwert der Zwischenstromphase aus der Summe des Stromistwertes und der jeweils mit einem Korrekturfaktor gewichteten Abweichungen des Spannungsistwertes der Ausgangsspannung der Schweißstromquelle von einem Spannungsfestwert und des Stromistwertes des Schweißstromes von einem Stromfestwert bildet.

5. Lichtbogen-Schweißverfahren nach einem der voranstehenden Ansprüche, **dadurch gekennzeichnet, dass** man den Schweißstrom in der Zwischenstromphase zyklisch regelt, wobei man zur Bestimmung des Stromsollwertes in einem aktuellen Regelzyklus den im vorangehenden Regelzyklus gemessenen Istwert des Schweißstroms oder den im vorangehenden Regelzyklus bestimmten Sollwert des Schweißstromes sowie den im vorangehenden Regelzyklus gemessenen Istwert der Ausgangsspannung der Schweißstromquelle heranzieht, wobei man diese Werte jeweils mit einem Korrekturfaktor gewichtet.

6. Lichtbogen-Schweißverfahren nach einem der voranstehenden Ansprüche, **dadurch gekennzeichnet, dass** man einer Vielzahl von Korrekturfaktoren jeweils einen Führungsparameter zuordnet und mit dieser Zuordnung in einem Speicherglied hinterlegt, und dass man bei Vorgabe eines bestimmten Führungsparameters die diesem Führungsparameter zugeordneten Korrekturfaktoren aus dem Speicherglied abruft und zur Bestimmung des Stromsollwertes der Zwischenstromphase heranzieht.

7. Lichtbogen-Schweißverfahren nach einem der voranstehenden Ansprüche, **dadurch gekennzeichnet, dass** man den Stromsollwert der Zwischenstromphase auf einen Maximalwert begrenzt.

8. Lichtbogen-Schweißverfahren nach einem der voranstehenden Ansprüche, **dadurch gekennzeichnet, dass** man den Stromsollwert der Zwischenstromphase auf einen Minimalwert begrenzt.

9. Lichtbogen-Schweißverfahren nach einem der voranstehenden Ansprüche, **dadurch gekennzeichnet, dass** man die Dauer der Zwischenstromphase auf einen Mindestwert begrenzt.

10. Lichtbogen-Schweißverfahren nach einem der voranstehenden Ansprüche, **dadurch gekennzeichnet, dass** die Zwischenstromphase eine Dauer von 0,5 ms bis 10 ms aufweist.

11. Lichtbogen-Schweißverfahren nach einem der voranstehenden Ansprüche, **dadurch gekennzeichnet, dass** man einen Repräsentationsistwert erfasst, der den Verlauf des Schweißstromes in der Zwischenstromphase charakterisiert, und den Repräsentationsistwert mit einem Repräsentationssollwert vergleicht, und dass man auf Basis dieses Vergleichs den Stromsollwert der Zwischenstromphase und/oder den Stromsollwert der Grundstromphase und/oder die Pulsfrequenz des Schweißstroms verändert.

12. Lichtbogen-Schweißverfahren nach einem der voranstehenden Ansprühe, **dadurch gekennzeichnet, dass** man einen Repräsentationsistwert erfasst, der den Verlauf des Schweißstromes in der Zwischenstromphase charakterisiert, und den Repräsentationsistwert mit Maximal- und Minimalwerten des Stromsollwertes der Zwischenstromphase vergleicht, und dass man in Abhängigkeit vom Ergebnis des Vergleiches den Stromsollwert der Grundstromphase und/oder die Pulsfrequenz des Schweißstromes verändert.

13. Lichtbogen-Schweißverfahren nach einem der voranstehenden Ansprüche, **dadurch gekennzeichnet, dass** man einen Repräsentationsistwert erfasst, der den Verlauf des Schweißstromes in der Zwischenstromphase charakterisiert, und den Repräsentationsistwert mit einem Repräsentationssollwert vergleicht, und dass man den Stromsollwert der Grundstromphase und/oder die Pulsfrequenz des Schweißstromes regelt, wobei man einen vorgebbaren Sollwert der Grundstrom- bzw. Pulsfrequenzregelung oder einen Verstärkungsfaktor der Grundstrom- bzw. Pulsfrequenzregelung in Abhängigkeit von einer Abweichung des Repräsentationsistwertes vom Repräsentationssollwert verändert.

14. Lichtbogen-Schweißverfahren nach Anspruch 13, **dadurch gekennzeichnet, dass** man den Verstärkungsfaktor proportional oder integral-proportional zum Betrag der Abweichung des Repräsentationsistwertes vom Repräsentationssollwert verändert.

15. Lichtbogen-Schweißverfahren nach Anspruch 11, 12, 13 oder 14, **dadurch gekennzeichnet, dass** man als Repräsentationsistwert den über die Dauer der Zwischenstromphase geglätteten Istwert des Schweißstromes in der Zwischenstromphase verwendet.

16. Schweißstromquelle zur Durchführung der Lichtbogen-Schweißverfahrens nach einem der voranstehenden Ansprüche mit einem Steuerteil und einem vom Steuerteil steuerbaren Leistungsteil, an dessen Ausgang eine Schweißelektrode anschließbar ist, wobei vom Leistungsteil ein gepulster Schweißstrom bereitstellbar ist, der eine Grundstromphase, eine Pulsstromphase und eine an die Pulsstromphase anschließende Zwischenstromphase aufweist, **dadurch gekennzeichnet, dass** mittels des Steuerteils (14) Stromsollwerte der Grundstromphase (C), der Pulsstromphase (A) und der Zwischenstromphase (B) generierbar sind, wobei der Stromsollwert der Zwischenstromphase (B) auf Basis eines vom Istwert des Schweißstromes und vom Istwert der Ausgangsspannung des Leistungsteils (16) abhängigen Stromsollwertes bestimmt wird.

17. Schweißstromquelle nach Anspruch 16, **dadurch gekennzeichnet, dass** das Steuerteil (14) ein Stromregelglied (81) aufweist mit einem Sollwerteingang (107), dem in den einzelnen Stromphasen (A, B, C) des Schweißstroms unterschiedliche Stromsollwerte bereitstellbar sind.

18. Schweißstromquelle nach Anspruch 17, **dadurch gekennzeichnet, dass** der Sollwerteingang (107) über eine elektrisch steuerbare Schalteinheit (94) während der Grundstromphase (C) und während der Pulsstromphase (A) mit einem ersten Sollwertbestimmungsglied (88) und während der Zwischenstromphase (B) mit einem zweiten Sollwertbestimmungsglied (90) verbindbar ist, wobei das zweite Sollwertbestimmungsglied (90) mit einem Stromistwerterfassungsglied (77) zur Erfassung des Istwertes des Schweißstromes und mit einem Spannungsistwerterfassungsglied (77) zur Erfassung des Istwertes der Ausgangsspannung des Leistungsteiles (16) verbunden ist.

19. Schweißstromquelle nach Anspruch 16, 17 oder 18, **dadurch gekennzeichnet, dass** das Steuerteil (14) ein Speicherglied (114) aufweist zum Abspeichern von Korrekturfaktoren, die in die Bestimmung des Stromsollwertes in der Zwischenstromphase (B) einfließen.

20. Schweißstromquelle nach einem der Ansprüche 16 bis 19, **dadurch gekennzeichnet, dass** der Stromsollwert der Grundstromphase und/oder die Pulsfrequenz des Schweißstromes mittels des Steuerteils (14) regelbar sind.

21. Schweißstromquelle nach einem der Ansprüche 16 bis 20, **dadurch gekennzeichnet, dass** das Steuerteil (14) ein Repräsentationsistwerterfassungsglied (116) aufweist zum Erfassen eines Repräsentationsistwertes, der den Verlauf des Schweißstromes in der Zwischenstromphase (B) charakterisiert, wobei dem Repräsentationsistwerterfassungsglied (116) ein Vergleichsglied (121) nachgeordnet ist zum Vergleich des Repräsentationsistwertes mit einem Repräsentationssollwert.

22. Schweißstromquelle nach Anspruch 21, **dadurch gekennzeichnet, dass** die Stromsollwerte in der Grundstromphase und/oder der Zwischenstromphase und/oder die Pulsfrequenz des Schweißstromes in Abhängigkeit von der Abweichung des Repräsentationsistwertes vom Repräsentationssollwert regelbar sind.

23. Schweißstromquelle nach einem der Ansprüche 16 bis 22, **dadurch gekennzeichnet, dass** das Steuerteil (14) einen programmierbaren Mikrocontroller aufweist.


**Claims**

1. Electric arc welding method, in which an electric arc burns between a consumable welding electrode continuously fed to a welding torch and a workpiece in a shielding gas atmosphere and material being molten off from the welding electrode transfers into a molten pool on the workpiece, wherein the welding electrode has supplied thereto, from a welding current source, a pulsed welding current having a background current phase, a pulse current phase and an intermediate current phase following the pulse current phase, **characterized in that** in the intermediate current phase, the welding current is regulated on the basis of a current setpoint value which is determined in dependence upon the current actual value of the welding current and the voltage actual value of the output voltage of the welding current source.

2. Electric arc welding method in accordance with claim 1, **characterized in that** the current setpoint value of the intermediate current phase is determined taking into account correction factors.

3. Electric arc welding method in accordance with claim 1 or 2, **characterized in that**, for the determination of the current setpoint value of the intermediate current phase, the sum of the current actual value of the welding current and the voltage actual value of the output voltage of the welding current source is formed, wherein the current actual value and the voltage actual value are each weighted by a correction factor.

**4.** Electric arc welding method in accordance with claim 1, 2 or 3, **characterized in that** the current setpoint value of the intermediate current phase is formed from the sum of the current actual value and the deviations, weighted in each case by a correction factor, of the voltage actual value of the output voltage of the welding current source from a fixed voltage value and of the current actual value of the welding current from a fixed current value.

**5.** Electric arc welding method in accordance with any one of the preceding claims, **characterized in that** in the intermediate current phase, the welding current is regulated in a cyclical manner, wherein, for determining the current setpoint value in a presently ongoing regulating cycle, the actual value of the welding current measured in the preceding regulating cycle or the setpoint value of the welding current determined in the preceding regulating cycle and the actual value of the output voltage of the welding current source measured in the preceding regulating cycle are used, wherein these values are each weighted by a correction factor.

**6.** Electric arc welding method in accordance with any one of the preceding claims, **characterized in that** a plurality of correction factors are in each case associated with a command parameter and stored with this association in a storage member, and **in that**, when a certain command parameter is set, the correction factors associated with this command parameter are retrieved from the storage member and used for determining the current setpoint value of the intermediate current phase.

**7.** Electric arc welding method in accordance with any one of the preceding claims, **characterized in that** the current setpoint value of the intermediate current phase is limited to a maximum value.

**8.** Electric arc welding method in accordance with any one of the preceding claims, **characterized in that** the current setpoint value of the intermediate current phase is limited to a minimum value.

**9.** Electric arc welding method in accordance with any one of the preceding claims, **characterized in that** the duration of the intermediate current phase is limited to a minimum value.

**10.** Electric arc welding method in accordance with any one of the preceding claims, **characterized in that** the intermediate current phase has a duration of 0.5 ms to 10 ms.

**11.** Electric arc welding method in accordance with any one of the preceding claims, **characterized in that** a representation actual value is detected which characterizes the course of the welding current in the intermediate current phase, and **in that** the representation actual value is compared with a representation setpoint value, and **in that** the current setpoint value of the intermediate current phase and/or the current setpoint value of the background current phase and/or the pulse frequency of the welding current is or are changed on the basis of said comparison.

**12.** Electric arc welding method in accordance with any one of the preceding claims, **characterized in that** a representation actual value is detected which characterizes the course of the welding current in the intermediate current phase, and **in that** the representation actual value is compared with maximum and minimum values of the current setpoint value of the intermediate current phase, and **in that** the current setpoint value of the background current phase and/or the pulse frequency of the welding current is or are changed depending on said comparison.

**13.** Electric arc welding method in accordance with any one of the preceding claims, **characterized in that** a representation actual value is detected which characterizes the course of the welding current in the intermediate current phase, and **in that** the representation actual value is compared with a representation setpoint value, and **in that** the current setpoint value of the background current phase and/or the pulse frequency of the welding current is or are regulated, wherein a presettable setpoint value of the background current regulation and the pulse frequency regulation respectively or a gain factor of the background current regulation and the pulse frequency regulation respectively is or are changed depending on a deviation of the representation actual value from the representation setpoint value.

**14.** Electric arc welding method in accordance with claim 13, **characterized in that** the gain factor is changed proportionally or integrally-plus-proportionally to the amount of the deviation of the representation actual value from the representation setpoint value.

**15.** Electric arc welding method in accordance with claim 11, 12, 13 or 14, **characterized in that** the actual value of the welding current in the intermediate current phase smoothed over the duration of the intermediate current phase is used as the representation actual value.

**16.** Welding current source for carrying out the electric arc welding method in accordance with any one of the preceding claims, the welding current source having a control part and a power part controllable by the control part and to the output of which a welding electrode is connectable, wherein a pulsed welding current is providable by the power part, said pulsed welding current having a background current phase, a pulse current phase and an intermediate current phase following the pulse current phase, **characterized in that** current setpoint values of the background current phase (C), the pulse current phase (A) and the intermediate current phase (B) are generateable by way of the control part (14), wherein the current setpoint value of the intermediate current phase (B) is determined on the basis of a current setpoint value which is dependent on the actual value of the welding current and on the actual value of the output voltage of the power part (16).

**17.** Welding current source in accordance with claim 16, **characterized in that** the control part (14) comprises a current regulating member (81) having a setpoint value input (107) to which different current setpoint values are providable in the individual current phases (A, B, C) of the welding current.

**18.** Welding current source in accordance with claim 17, **characterized in that** the setpoint value input (107) is connectable, via an electrically controllable switching unit (94), during the background current phase (C) and during the pulse current phase (A) to a first setpoint value determining member (88) and during the intermediate current phase (B) to a second setpoint value determining member (90), wherein the second setpoint value determining member (90) is connected to a current actual value detecting member (77) for detecting the actual value of the welding current and to a voltage actual value detecting element (77) for detecting the actual value of the output voltage of the power part (16).

**19.** Welding current source in accordance with claim 16, 17 or 18, **characterized in that** the control part (14) comprises a storage member (114) for storing correction factors which enter into the determination of the current setpoint value in the intermediate current phase (B).

**20.** Welding current source in accordance with any one of claims 16 to 19, **characterized in that** the current setpoint value of the background current phase and/or the pulse frequency of the welding current is or are regulatable by way of the control part (14).

**21.** Welding current source in accordance with any one of claims 16 to 20, **characterized in that** the control part (14) comprises a representation actual value detecting member (116) for detecting a representation actual value which characterizes the course of the welding current in the intermediate current phase (B), wherein a comparing member (121) is located downstream of the representation actual value detecting member (116) for comparing the representation actual value with a representation setpoint value.

**22.** Welding current source in accordance with claim 21, **characterized in that** the current setpoint values in the background current phase and/or in the intermediate current phase and/or the pulse frequency of the welding current is or are regulatable depending on the deviation of the representation actual value from the representation setpoint value.

**23.** Welding current source in accordance with any one of claims 16 to 22, **characterized in that** the control part (14) comprises a programmable microcontroller.

**Revendications**

**1.** Procédé de soudage à l'arc, selon lequel un arc électrique jaillit dans une atmosphère de gaz de protection entre une électrode de soudage fusible amenée de manière continue à un chalumeau de soudage et une pièce, et un matériau fondu par l'électrode de soudage, dans un bain de fusion, passe sur la pièce, dans lequel un courant de soudage pulsé, qui présente une phase de courant de base, une phase de courant pulsé et une phase de courant intermédiaire subséquente à la phase de courant pulsé, est amené à l'électrode de soudage, **caractérisé en ce qu'**on régule le courant de soudage dans la phase de courant intermédiaire sur la base d'une valeur théorique de courant, qu'on détermine en fonction de la valeur réelle de courant du courant de soudage et de la valeur réelle de tension de la tension de sortie de la source de courant de soudage.

**2.** Procédé de soudage à l'arc selon la revendication 1, **caractérisé en ce qu'**on détermine la valeur théorique de courant de la phase de courant intermédiaire en prenant en compte des facteurs de correction.

**3.** Procédé de soudage à l'arc selon la revendication 1 ou 2, **caractérisé en ce que**, pour la détermination de la valeur théorique de courant de la phase de courant intermédiaire, on forme la somme de la valeur réelle de courant du courant de soudage et de la valeur réelle de tension de la tension de sortie de la source de courant de soudage, dans lequel on pondère la valeur réelle de courant et la valeur réelle de tension respectivement au moyen d'un facteur de correction.

**4.** Procédé de soudage à l'arc selon la revendication 1, 2 ou 3, **caractérisé en ce qu'**on forme la valeur théorique de courant de la phase de courant intermédiaire à partir de la somme de la valeur réelle de courant et des écarts entre la valeur réelle de tension de la tension de sortie de la source de courant de soudage et une constante de tension, et entre la valeur réelle de courant du courant de soudage et une constante de courant, dans lequel on poudère ces écarts respectivement au moyen d'un facteur de correction.

**5.** Procédé de soudage à l'arc selon l'une quelconque des revendications précédentes, **caractérisé en ce qu'**on régule de manière cyclique le courant de soudage dans la phase de courant intermédiaire, dans lequel, pour déterminer la valeur théorique de courant au cours d'un cycle de régulation actuel, on utilise la valeur réelle du courant de soudage mesurée au cours du cycle de régulation précédent ou la valeur théorique du courant de soudage déterminée au cours du cycle de régulation précédent ainsi que la valeur réelle de la tension de sortie de la source de courant de soudage mesurée au cours du cycle de régulation précédent, dans lequel on pondère ces valeurs dans chaque cas au moyen d'un facteur de correction.

**6.** Procédé de soudage à l'arc selon l'une quelconque des revendications précédentes, **caractérisé en ce qu'**on attribue dans chaque cas un paramètre de guidage à une pluralité de facteurs de correction et on l'enregistre conjointement avec cette attribution dans un élément de mémoire, et **en ce que**, lors de la prédéfinition d'un paramètre de guidage défini, on extrait de l'élément de mémoire les facteurs de correction attribués à ce paramètre de guidage et on les utilise pour déterminer la valeur théorique de courant de la phase de courant intermédiaire.

**7.** Procédé de soudage à l'arc selon l'une quelconque des revendications précédentes, **caractérisé en ce qu'**on limite la valeur théorique de courant de la phase de courant intermédiaire à une valeur maximale.

**8.** Procédé de soudage à l'arc selon l'une quelconque des revendications précédentes, **caractérisé en ce qu'**on limite la valeur théorique de courant de la phase de courant intermédiaire à une valeur minimale.

**9.** Procédé de soudage à l'arc selon l'une quelconque des revendications précédentes, **caractérisé en ce qu'**on limite la durée de la phase de courant intermédiaire à une valeur minimale.

**10.** Procédé de soudage à l'arc selon l'une quelconque des revendications précédentes, **caractérisé en ce que** la phase de courant intermédiaire présente une durée de 0,5 ms à 10 ms.

**11.** Procédé de soudage à l'arc selon l'une quelconque des revendications précédentes, **caractérisé en ce qu'**on acquiert une valeur réelle de représentation qui caractérise la variation du courant de soudage dans la phase de courant intermédiaire, et on compare la valeur réelle de représentation à une valeur théorique de représentation, et **en ce que**, sur la base de cette comparaison, on modifie la valeur théorique de courant de la phase de courant intermédiaire et/ou la valeur théorique de courant de la phase de courant de base et/ou la fréquence d'impulsion du courant de soudage.

**12.** Procédé de soudage à l'arc selon l'une quelconque des revendications précédentes, **caractérisé en ce qu'**on acquiert une valeur réelle de représentation qui caractérise la variation du courant de soudage dans la phase de courant intermédiaire, et on compare la valeur réelle de représentation aux valeurs maximale et minimale de la valeur théorique de courant de la phase de courant intermédiaire, et **en ce qu'**on modifie la valeur théorique de courant de la phase de courant de base et/ou la fréquence d'impulsion du courant de soudage en fonction du résultat de la comparaison.

**13.** Procédé de soudage à l'arc selon l'une quelconque des revendications précédentes, **caractérisé en ce qu'**on acquiert une valeur réelle de représentation qui caractérise la variation du courant de soudage dans la phase de courant intermédiaire, et on compare la valeur réelle de représentation à une valeur théorique de représentation, et **en ce qu'**on régule la valeur théorique de courant de la phase de courant de base et/ou on régule la fréquence d'impulsion du courant de soudage, dans lequel on modifie une valeur théorique pouvant être prédéfinie de la régulation de courant de base ou de fréquence d'impulsion ou un facteur d'amplification de la régulation de courant de base ou de fréquence d'impulsion en fonction d'un écart entre la valeur réelle de représentation et la valeur théorique de représentation.

14. Procédé de soudage à l'arc selon la revendication 13, **caractérisé en ce qu'**on modifie le facteur d'amplification de manière proportionnelle ou proportionnelle-intégrale à la grandeur de l'écart entre la valeur réelle de représentation et la valeur théorique de représentation.

15. Procédé de soudage à l'arc selon la revendication 11, 12, 13 ou 14, **caractérisé en ce qu'**on utilise comme valeur réelle de représentation la valeur réelle du courant de soudage dans la phase de courant intermédiaire lissée pendant la durée de la phase de courant intermédiaire.

16. Source de courant de soudage pour la mise en oeuvre du procédé de soudage à l'arc selon l'une quelconque des revendications précédentes, comprenant une partie de commande et une partie de puissance qui peut être commandée par la partie de commande et à la sortie de laquelle peut être raccordée une électrode de soudage, dans lequel un courant de soudage pulsé, qui présente une phase de courant de base, une phase de courant pulsé et une phase de courant intermédiaire subséquente à la phase de courant pulsé, peut être fourni par la partie de puissance, **caractérisée en ce que** des valeurs théoriques de courant de la phase de courant de base (C), de la phase de courant pulsé (A) et de la phase de courant intermédiaire (B) peuvent être générées au moyen de la partie de commande (14), dans lequel la valeur théorique de courant de la phase de courant intermédiaire (B) est déterminée sur la base d'une valeur théorique de courant dépendant de la valeur réelle du courant de soudage et de la valeur réelle de la tension de sortie de la partie de puissance (16).

17. Source de courant de soudage selon la revendication 16, **caractérisée en ce que** la partie de commande (14) présente un élément de régulation de courant (81) pourvu d'une entrée de valeur théorique (107) à laquelle différentes valeurs théoriques de courant peuvent être fournies dans les différentes phases de courant (A, B, C) du courant de soudage.

18. Source de courant de soudage selon la revendication 17, **caractérisée en ce que** l'entrée de valeur théorique (107) peut être reliée à un premier élément de détermination de valeur théorique (88) pendant la phase de courant de base (C) et pendant la phase de courant pulsé (A), et à un deuxième élément de détermination de valeur théorique (90) pendant la phase de courant intermédiaire (B) par l'intermédiaire d'une unité de commutation (94) à commande électrique, dans lequel le deuxième élément de détermination de valeur théorique (90) est relié à un élément d'acquisition de valeur réelle de courant (77) destiné à acquérir la valeur réelle du courant de soudage et à un élément d'acquisition de valeur réelle de tension (77) destiné à acquérir la valeur réelle de la tension de sortie de la partie de puissance (16).

19. Source de courant de soudage selon la revendication 16, 17 ou 18, **caractérisée en ce que** la partie de commande (14) présente un élément de mémoire (114) destiné à mettre en mémoire des facteurs de correction qui se répercutent sur la détermination de la valeur théorique de courant dans la phase de courant intermédiaire (B).

20. Source de courant de soudage selon l'une quelconque des revendications 16 à 19, **caractérisée en ce que** la valeur théorique de courant de la phase de courant de base et/ou la fréquence d'impulsion du courant de soudage peuvent être régulées au moyen de la partie de commande (14).

21. Source de courant de soudage selon l'une quelconque des revendications 16 à 20, **caractérisée en ce que** la partie de commande (14) présente un élément d'acquisition de valeur réelle de représentation (116) destiné à acquérir une valeur réelle de représentation qui caractérise la variation du courant de soudage dans la phase de courant intermédiaire (B), dans lequel un élément de comparaison (121) est monté en aval de l'élément d'acquisition de valeur réelle de représentation (116) et est destiné à comparer la valeur réelle de représentation à une valeur théorique de représentation.

22. Source de courant de soudage selon la revendication 21, **caractérisée en ce que** les valeurs théoriques de courant dans la phase de courant de base et/ou la phase de courant intermédiaire et/ou la fréquence d'impulsion du courant de soudage peuvent être régulées en fonction de l'écart entre la valeur réelle de représentation et la valeur théorique de représentation.

23. Source de courant de soudage selon l'une quelconque des revendications 16 à 22, **caractérisée en ce que** la partie de commande (14) présente un microcontrôleur programmable.

# FIG.1

FIG.2

# FIG.3

EP 2 359 974 B1

## FIG.4

50

137

70

136

135

60

# FIG.5

# FIG.6

# FIG.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19808383 A1
- EP 0787555 A1
- EP 1407849 A2
- WO 2005044502 A1
- DE 3200086 A1
- US 2007235434 A1